# EUROPEAN PATENT APPLICATION

(11) **EP 4 832 607 A1**
(43) Date of publication of application: **28.10.2026**
(21) Application number: 24923451.9
(22) Date of filing: 14.11.2024
(51) Int. Cl.: H04W 68/02, H04B 7/185, H04W 76/10

(54) **WIRELESS COMMUNICATION METHOD AND COMMUNICATION DEVICE**

(30) Priority: 08.02.2024 CN 202410178395
(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN)
(74) Representative: RGTH
(86) International application number: PCT/CN2024/132042
(87) International publication number: WO 2025/167247

(57) **Abstract**

Provided are a wireless communication method and a communication device. The method comprises: a first network element receives first information sent by a second network element, the first information comprising one or more of the following pieces of information: state information of a first terminal device, context information of the first terminal device, and security context information of the first terminal device. The second network element is used for performing mobility management on a terminal device.

## Description

### TECHNICAL FIELD

The present application relates to the field of communication technologies, and more particularly, to a wireless communication method and a communication device.

### BACKGROUND

In the satellite communication scenario, how to improve the communication quality of terminal devices is a problem that needs to be solved.

### SUMMARY

The present application provides a wireless communication method and a communication device, and various aspects involved in the present application will be introduced below.

In a first aspect, a wireless communication method is provided, which includes: receiving, by a first network element, first information transmitted by a second network element; where the first information includes one or more of following information: state information of a first terminal device, context information of the first terminal device, or security context information of the first terminal device; where the second network element is configured to perform mobility management for terminal devices.

In a second aspect, a wireless communication method is provided, which includes: transmitting, by a second network element, first information to a first network element; where the first information includes one or more of following information: state information of a first terminal device, context information of the first terminal device, or security context information of the first terminal device; where the second network element is configured to perform mobility management for terminal devices.

In a third aspect, a wireless communication method is provided, which includes: receiving, by a third network element, second information transmitted by a first network element; where the second information includes one or more of following information: subscription data of a second terminal device, or security parameters related to authentication and authorization of the second terminal device; where the third network element is configured to store subscription data of terminal devices, the second terminal device is a terminal device that fails to register with or attach to a second network element, the second network element is configured to perform mobility management for terminal devices, and the second network element is associated with the third network element.

In a fourth aspect, a wireless communication method is provided, which includes: transmitting, by a first terminal device, an attach request or a registration request to a second network element; where the second network element is configured to perform mobility management for terminal devices.

In a fifth aspect, a wireless communication method is provided, which includes: transmitting, by a first access network device, broadcast information; where the first access network is located on a first satellite, and the broadcast information is used to indicate one or more of: identifiers of terminal devices served by the first satellite, or an identifier of the first satellite.

In a sixth aspect, a communication device is provided, where the communication device is a first network element, and the communication device includes: a first communication module, configured to receive first information transmitted by a second network element; where the first information includes one or more of following information: state information of a first terminal device, context information of the first terminal device, or security context information of the first terminal device; where the second network element is configured to perform mobility management for terminal devices.

In a seventh aspect, a communication device is provided, where the communication device is a second network element, and the communication device includes: a first communication module, configured to transmit first information to a first network element; where the first information includes one or more of following information: state information of a first terminal device, context information of the first terminal device, or security context information of the first terminal device; where the second network element is configured to perform mobility management for terminal devices.

In an eighth aspect, a communication device is provided, where the communication device is a third network element, and the communication device includes: a first communication module, configured to receive second information transmitted by a first network element; where the second information includes one or more of following information: subscription data of a second terminal device, or security parameters related to authentication and authorization of the second terminal device; where the third network element is configured to store subscription data of terminal devices, the second terminal device is a terminal device that fails to register with or attach to a second network element, the second network element is configured to perform mobility management for terminal devices, and the second network element is associated with the third network element.

In a ninth aspect, a communication device is provided, where the communication device is a first terminal device, and the communication device includes: a first communication module, configured to transmit an attach request or a registration request to a second network element; where the second network element is configured to perform mobility management for terminal devices.

In a tenth aspect, a communication device is provided, where the communication device is a first access network device, and the communication device includes: a first communication module, configured to transmit broadcast information; where the first access network device is located on a first satellite, and the broadcast information is used to indicate one or more of: identifiers of terminal devices served by the first satellite, or an identifier of the first satellite.

In an eleventh aspect, a communication device is provided, which includes a processor and a memory. The memory is configured to store one or more computer programs, and the processor is configured to call the computer programs from the memory to enable the terminal device to perform the method according to any one of the first aspect to the fifth aspect.

In a twelfth aspect, embodiments of the present application provide a computer-readable storage medium, which stores a computer program that can cause the method according to any one of the first aspect to the fifth aspect to be performed.

In a thirteenth aspect, the embodiments of the present application provide a computer program product, which includes a non-transitory computer-readable storage medium having a computer program stored thereon, and the computer program is operable to perform the method according to any one of the first aspect to the fifth aspect.

In a fourteenth aspect, the embodiments of the present application provide a chip, which includes a memory and a processor, and the processor can call a computer program from the memory and run the computer program to implement the method according to any one of the first aspect to the fifth aspect.

### BRIEF DESCRIPTION OF THE DRAWINGS

FIG. 1A illustrates a wireless communication system to which an embodiment of the present application is applied.
FIG. 1B illustrates another wireless communication system to which an embodiment of the present application is applied.
FIG. 1C illustrates yet another wireless communication system to which an embodiment of the present application is applied.
FIG. 2 is a flowchart of a wireless communication method provided by the related art.
FIG. 3 is an exemplary diagram of a communication scenario to which the embodiments of the present application are applicable.
FIG. 4 is a flowchart of a wireless communication method provided by the embodiments of the present application.
FIG. 5 is a flowchart of a wireless communication method provided by the embodiments of the present application.
FIG. 6 is a flowchart of a wireless communication method provided by the embodiments of the present application.
FIG. 7 is a flowchart of a wireless communication method provided by the embodiments of the present application.
FIG. 8 is a flowchart of a wireless communication method provided by the embodiments of the present application.
FIG. 9 is a flowchart of a wireless communication method provided by the embodiments of the present application.
FIG. 10 is a schematic block diagram of a communication device provided by the embodiments of the present application.
FIG. 11 is a schematic block diagram of a communication device provided by the embodiments of the present application.
FIG. 12 is a schematic block diagram of a communication device provided by the embodiments of the present application.
FIG. 13 is a schematic block diagram of a communication device provided by the embodiments of the present application.
FIG. 14 is a schematic block diagram of a communication device provided by the embodiments of the present application.
FIG. 15 is a schematic block diagram of an apparatus for communication according to the embodiments of the present application.

### DETAILED DESCRIPTION OF EMBODIMENTS

### Communication System Architecture

The technical solutions in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a 5th-generation (5G) communication system, and other communication systems, such as future communication systems like a 6th-generation (6G) mobile communication system and a satellite communication system.

Generally speaking, conventional communication systems support a limited number of connections, which is easy to be implemented. However, with the development of the communication technology, mobile communication systems will not only support conventional communications, but also support, for example, device-to-device (D2D) communication, machine-to-machine (M2M) communication, machine type communication (MTC), vehicle-to-vehicle (V2V) communication, or vehicle-to-everything (V2X) communication. The embodiments of the present application may also be applied to these communication systems.

The communication system in the embodiments of the present application may be applied to a carrier aggregation (CA) scenario and a dual connectivity (DC) scenario, and may also be applied to a standalone (SA) network deployment scenario.

The communication system in the embodiments of the present application may be applied to an unlicensed spectrum, where the unlicensed spectrum may also be considered as a shared spectrum; alternatively, the communication system in the embodiments of the present application may also be applied to a licensed spectrum, where the licensed spectrum may also be considered as a dedicated spectrum.

The embodiments of the present application may be applied to the NTN system, and may also be applied to a terrestrial network (TN) system. As an example and not a limitation, the NTN system includes a NR-based NTN system and an IoT-based NTN system.

In the embodiments of the present application, various embodiments are described from the perspective of a network device and a terminal device. The terminal device may also be referred to as a user equipment (UE), an access terminal, a user unit, a user station, a mobile console, a mobile station (MS), a mobile terminal (MT), a remote station, a remote terminal, a mobile device, a user terminal, a terminal, a wireless communication device, a user agent, or a user apparatus, or the like.

In the embodiments of the present application, the terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next-generation communication system such as an NR network, a terminal device in a future evolved public land mobile network (PLMN) network, or the like.

In the embodiments of the present application, the terminal device may refer to a device that provides voice and/or data connectivity to a user, and can be used to connect people, objects, and machines, such as a handheld device with a wireless connectivity function or an in-vehicle device with a wireless connectivity function. The terminal device in the embodiments of the present application may be a mobile phone, a pad, a laptop computer, a handheld computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in a smart home, or the like. Optionally, the terminal device can act as a base station. For example, the terminal device can act as a scheduling entity that provides sidelink signals between terminal devices in V2X or D2D. For example, a cellular phone and a vehicle communicate with each other using sidelink signals. The cellular phone communicates directly with smart home devices, i.e., without requiring the base station to relay communication signals

In the embodiments of the present application, the terminal device may be deployed on land, including indoors or outdoors, handheld, wearable, or in-vehicle; the terminal device may also be deployed on water (e.g., on a steamship); and the terminal device may also be deployed in air (e.g., on an aircraft, on a balloon, or on a satellite).

In the embodiments of the present application, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home. The terminal device involved in the embodiments of the present application may also be referred to as a terminal, a user equipment (UE), an access terminal device, an in-vehicle terminal, an industrial control terminal, a UE unit, a UE station, a mobile console, a mobile station, a remote station, a remote terminal device, a mobile device, a UE, a wireless communication device, a UE agent, or a UE apparatus. The terminal device may be fixed or mobile.

As an example and not a limitation, in the embodiments of the present application, the terminal device may also be a wearable device. The wearable device, also known as a wearable smart device, is a general term for wearable devices developed by performing the intellectualized design on daily wear by applying wearable technologies, such as glasses, gloves, watches, clothing and shoes. The wearable device is a portable device that is worn directly on a body, or integrated into clothes or accessories of users. The wearable device not only is a hardware device, but also implements powerful functions by software support as well as data interaction or cloud interaction. Generalized wearable smart devices include devices that are fully functional, large in size, and capable of implementing full or partial functions without relying on smart phones, such as smart watches or smart glasses, as well as devices that only focus on a certain type of application function and need to be used in conjunction with other devices such as a smart phone, for example various smart bracelets and smart jewelry that monitor physical signs.

The network device in the embodiments of the present application may be a device used for communicating with a terminal device. The network device may also be referred to as an access network device or a wireless access network device, for example, the network device may be a base station. The network device in the embodiments of the present application may refer to a radio access network (RAN) node (or device) that connects the terminal device to a wireless network. The base station can broadly cover or be substituted with various names such as: a NodeB, an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a baseband unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, or the like, or a combination thereof. The base station may also refer to a communication module, modem, or chip installed within the above device or apparatus. The base station may also be a mobile switching center and a device that functions as a base station in D2D, vehicle-to-everything (V2X), or machine-to-machine (M2M) communication, a network-side device in a 6G network, a device that functions as a base station in a future communication system, or the like. The base station may support networks of the same or different access technologies. The specific technology and device form adopted by the network device will not be limited in the embodiments of the present application.

The base station may be fixed or mobile. For example, a helicopter or a drone may be configured to act as a mobile base station, and one or more cells may move according to the location of the mobile base station. In other examples, the helicopter or the drone may be configured to act as a device that communicates with another base station.

In some deployments, the network device in the embodiments of the present application may refer to a CU or a DU, or the network device may include a CU and a DU. The gNB may also include an AAU.

The network device and the terminal device may be deployed on land, including indoor or outdoor, handheld, or in-vehicle; the network device and the terminal device may also be deployed on water; and the network device and the terminal device may also be deployed on an aircraft, a balloon, or a satellite in air. The scenarios in which the network device and the terminal devices are located are not limited in the embodiments of the present application.

As an example and not a limitation, in the embodiments of the present application, the network device may have mobile characteristics, for example, the network device may be a device which is mobile. In some embodiments of the present application, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments of the present application, the network device may also be a base station deployed on land, water, or other places.

In the embodiments of the present application, the network device may provide services for a cell, and the terminal device communicates with the network device through transmission resources (e.g., frequency domain resources, or spectrum resources) used by the cell. The cell may be a cell corresponding to the network device (e.g., a base station). The cell may belong to a macro base station, or may belong to a base station corresponding to a small cell. The small cell here may include: a metro cell, a micro cell, a pico cell, a femto cell, or the like. The small cell has characteristics of small coverage area and low transmission power, which are applicable for providing a data transmission service with high-speed.

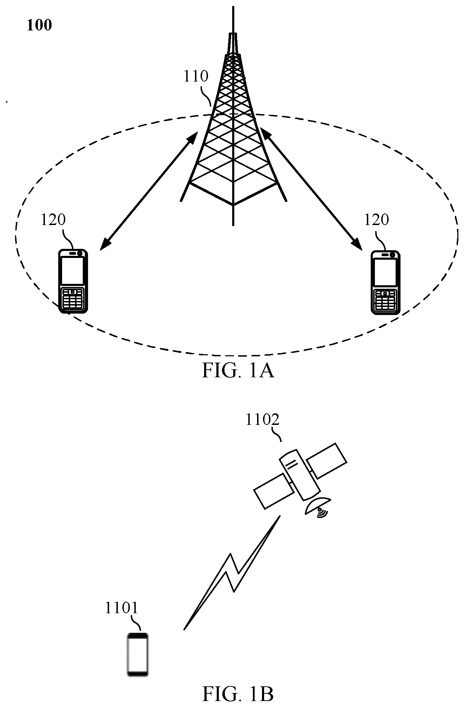

Exemplarily, FIG. 1A is a schematic diagram of a communication system architectural provided by the embodiments of the present application. As illustrated in FIG. 1A, a communication system 100 may include a network device 110, the network device 110 may be a device for communicating with terminal devices 120 (also referred to as a communication terminal or a terminal). The network device 110 may provide communication coverage for a specific geographical area and may communicate with terminal devices located within the coverage area.

FIG. 1A exemplarily illustrates one network device and two terminal devices. In some embodiments of the present application, the communication system 100 may include a plurality of network devices, and each of which may have a coverage area within which other number of terminal devices are located, which is not limited in the embodiments of the present application.

Exemplarily, FIG. 1B is a schematic diagram of another communication system architecture provided by an embodiment of the present application. Referring to FIG. 1B, it illustrates a terminal device 1101 and a satellite 1102, and wireless communication may be performed between the terminal device 1101 and the satellite 1102. The network formed between the terminal device 1101 and the satellite 1102 may also be referred to as an NTN. In the communication system architecture illustrated in FIG. 1B, the satellite 1102 may have functions of the base station, and the terminal device 1101 and the satellite 1102 may communicate directly. Under this system architecture, the satellite 1102 may be referred to as a network device. In some embodiments of the present application, the communication system may include a plurality of network devices 1102, and within the coverage area of each network device 1102, there may be other numbers of terminal devices, which is not limited in the embodiments of the present application.

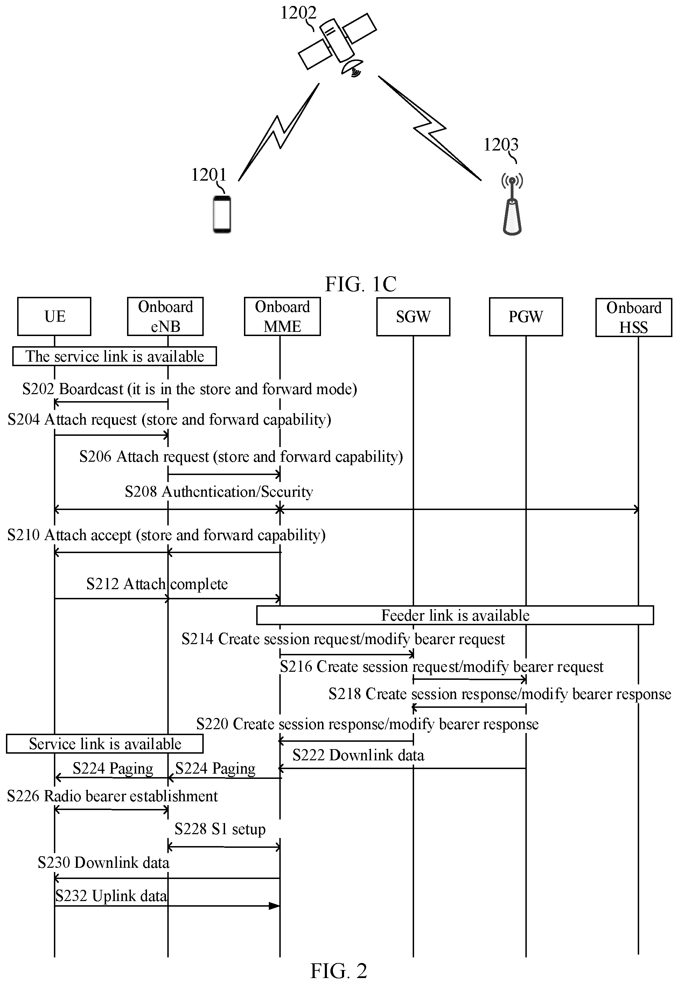

Exemplarily, FIG. 1C is a schematic diagram of another communication system architecture provided by the embodiments of the present application. Referring to FIG. 1C, it illustrates a terminal device 1201, a satellite 1202, and a base station 1203, and wireless communication may be performed between the terminal device 1201 and the satellite 1202, and communication may be performed between the satellite 1202 and the base station 1203. The network formed among the terminal device 1201, the satellite 1202, and the base station 1203 may also be referred to as an NTN. In the communication system architecture illustrated in FIG. 1C, the satellite 1202 may not have functions of the base station, and communication between the terminal device 1201 and the base station 1203 needs to be relayed through the satellite 1202. Under this system architecture, the base station 1203 may be referred to as a network device. In some embodiments of the present application, the communication system may include a plurality of network devices 1203, and within the coverage area of each network device 1203, there may be other numbers of terminal devices, which is not limited in the embodiments of the present application.

It should be noted that the systems shown in FIG. 1A to FIG. 1C to which the present application is applicable are merely examples. Certainly, the methods illustrated in the embodiments of the present application may also be applied to other systems, such as, a 5G communication system, an LTE communication system, and the like, which is not specifically limited in the embodiments of the present application.

In some embodiments of the present application, the wireless communication system illustrated in FIG. 1A to FIG. 1C may also include other network entities such as a mobility management entity (MME), an access and mobility management function (AMF), which is not limited in the embodiments of the present application.

It should be understood that, in the embodiments of the present application, a device with communication functions in a network/system may be referred to as a communication device. Taking the communication system 100 illustrated in FIG. 1A as an example, the communication device may include the network device 110 and the terminal devices 120 with communication functions. The network device 110 and the terminal device 120 may be the specific devices as described above, which will not be repeated here. The communication device may further include other devices in the communication system 100, such as a network controller, a mobility management entity, and other network entities, which are not limited in the embodiments of the present application.

It should be understood that, "indicate" mentioned in the embodiments of the present application may mean a direct indication, an indirect indication, or may mean that there is an association relationship. For example, A indicating B may mean that A directly indicates B, and for example, B may be acquired by A; it can also mean that A indirectly indicates B, and for example, A indicates C, and B may be acquired by C; alternatively, A indicating B may mean that there is an association relationship between A and B.

In the description of the embodiments of the present application, the term "corresponding" may mean that two elements are in a direct correspondence or an indirect correspondence, or may mean that there is an associative relationship between the two elements, or may mean a relationship of indicating and being indicated, or a relationship of configuring and being configured, or the like.

In the embodiments of the present application, "configuring" may be implemented by using at least one of a system message, a radio resource control (RRC) signaling, or a media access control control element (MAC CE).

In some embodiments of the present application, "pre-defined" or "preset" may be implemented by pre-storing corresponding codes, tables, or other manners that may be used to indicate relevant information in a device (e.g., including a terminal device and a network device), and its specific implementation is not limited in the present application. For example, "pre-defined" may refer to that defined in the protocol.

In some embodiments of the present application, the "protocol" may refer to a standard protocol in the communications field, for example, "protocol" may be an LTE protocol, an NR protocol, or relevant protocol applied in future communication systems, which are not be limited in the present application.

The related art proposes a solution for a UE to perform an attach procedure in a store and forward (S&F) mode in a case where the MME and a home subscriber server (HSS) are deployed on a satellite. The basic assumptions are as follows:
- The eNB, MME, and HSS are deployed on the same satellite.
- The eNB on board a satellite broadcasts that it is in a S&F satellite operation mode.
- The UE has a subscription and credentials in the onboard HSS. The HSS on board a satellite synchronizes with a terrestrial HSS when the feeder link is available.
- In a single-satellite deployment use case, the UE only accesses one satellite, which maintains a non-access stratum (NAS) and (AS) states of the UE
- No roaming support.

Considering the above assumptions, the following processes involving the eNB, MME, and HSS can be completed when a service link is available, no matter what the status of the feeder link is:
- The negotiation between UE and MME regarding the capability to support S&F satellite operation.
- The authentication and NAS security authentication can be completed in a case where when the service link is available.

Therefore, if a UE has set "Attach without packet data network (PDN) connectivity is supported" in the preferred network behavior during attach procedure and the network has acknowledged its support to the UE, an initial attach procedure without PDN connectivity can be completed when the service link is available.

If the UE also expects to establish a PDN connectivity during the attach procedure, the related art proposes to attach the UE to the MME and complete a NAS procedure without establishing general packet radio service tunneling protocol-control (GTP-C) tunnels between the MME and a serving gateway (SGW)/packet data network gateway (PGW) when the service link is available. The GTP-C tunnels can be established after the feeder link becomes available. In this case, only cellular Internet of Things control plane optimization (CIoT CP optimization) is considered, and the PDN connectivity only uses the control plane CIoT EPS optimization, that is, the MME includes a control plane only PDN connectivity indicator in a create session request.

An evolved universal terrestrial radio access network (E-UTRAN) attach procedure in the S&F scenario where the MME and the HSS are on board the satellite is illustrated in FIG. 2, with the specific process as follows.

In Step S202, when the service link is available, the eNB broadcasts that it is in the store and forward mode (S&F satellite operation mode).

In Step S204, if the UE has the capability to support the store and forward mode, the UE initiates the attach procedure by transmitting an attach request message to the eNB. In addition to parameters specified in clause 5.3.2.1 of TS 23.401, the UE also indicates its capability to support the S&F satellite operation in the attach request message.

In Step S206, the eNB forwards the attach request message to the MME as specified in clause 5.3.2.1 of TS 23.401. The MME checks whether the UE has the capability to support the S&F satellite operation; if not, the MME rejects the attach request with an appropriate cause value.

In Step S208, the authentication and NAS security procedure is performed as specified in clause 5.3.2.1 of TS 23.401.

In Step S210, the MME transmits an attach accept message to the eNB in an S1 application protocol (S1-AP) initial context setup request message or a DL NAS transport message. In addition to the parameters specified in clause 5.3.2.1 of TS 23.401, the MME indicates its capability to support the S&F satellite operation in the attach accept message. The eNB then forwards the attach accept message to the UE. If the UE has not included an EPS session management (ESM) message container in the Attach Request in Step S204, the following steps are skipped. If the UE has included an ESM message container in the attach request in Step S204, the MME allocates an evolved packet system (EPS) bearer identity for the default bearer associated with the UE. The EPS Quality of Service (QoS) information can be set to the default value received from the HSS.

In Step S212, the UE transmits an attach complete message to the MME.

In Step S214, if the UE has included an ESM message container in the attach request in Step S204, when the feeder link is available, the MME transmits a create session request message and a modify bearer request message to the SGW as specified in clause 5.3.2.1 of TS 23.401.

In Step S216, the SGW transmits a create session request message and a modify bearer request message to the PGW as specified in clause 5.3.2.1 of TS 23.401.

In Step S218, the PGW returns a create session response message and a modify bearer response message to the SGW as specified in clause 5.3.2.1 of TS 23.401.

In Step S220, the SGW returns a create session request message and a modify bearer request message to the MME as specified in clause 5.3.2.1 of TS 23.401.

In Step S222, downlink data can be transmitted from the S/PGW to the MME. The MME receives and stores the downlink data for the UE.

In Step S224, when the service link is available, that is, when the satellite covers the tracking areas in which the UE is registered, the MME transmits a paging message to the eNB. If the eNB receives the paging message from the MME, the UE is paged by the eNB.

In Step S226, the UE establishes a radio bearer for downlink data transmission.

In Step S228, an S1-MME path is established for downlink data transmission.

In Step S230, the MME transmits the downlink data to the UE.

In Step S232, the UE transmits uplink data to the MME.

The above solution only provides an implementation for the attach procedure under a single-satellite deployment scenario and does not address how the attach procedure should be implemented in a multi-satellite deployment scenario. Furthermore, due to the limited storage space on the satellite, it is impossible to store all UE subscription data in the HSS on the satellite. The HSS on each satellite needs to interact with the ground-deployed HSS to obtain required UE subscription data based on a target user group (target UEs) it serves. However, how the HSS on the satellite should synchronize with the ground HSS has not been solved. For example, which UEs' subscription data should be obtained by the HSS on the satellite during each interaction with the ground HSS. As another example, when the UE initiates an attach request, if the satellite in the sky does not have the corresponding UE subscription data stored, how to handle this situation. As another example, in a case where a UE is served by a plurality of satellites, whether the UE needs to interact with each satellite to complete the attach procedure. As another example, how to synchronize the access stratum (AS) state and non-access stratum (NAS) state of the UE across a plurality of satellites. As another example, how to synchronously release UE-related information stored in a plurality of satellites when the UE detaches from the core network.

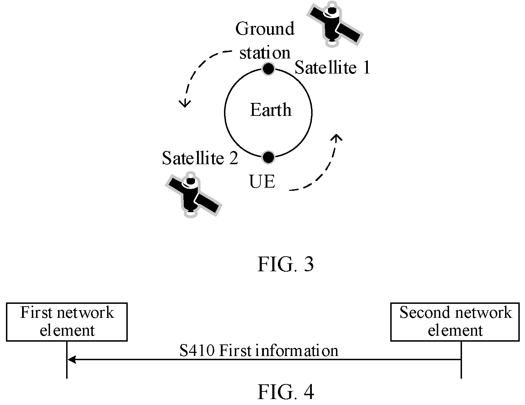

As illustrated in FIG. 3, a satellite company or an operator may deploy a plurality of satellites in the S&F mode to serve terminal devices. Due to the limited storage space on the satellites, it is impractical to directly store the subscription data of all terminal devices in the HSS on each satellite, and such data would also be difficult to manage and maintain. Therefore, it is more reasonable for each satellite to store only the subscription data of one set of terminal devices. The management of subscription data for terminal devices on satellites may be classified into two manners: static configuration and dynamic configuration.
- Static configuration: each satellite stores subscription data of only a specific set of terminal devices and the satellite serves only the specific set of terminal devices.
- Dynamic configuration: one terminal device may be served by any satellite, and the satellite needs to interact with the ground-deployed HSS in a timely manner to obtain the required terminal device subscription data.

Furthermore, in a case where a plurality of satellites serve the same terminal device, the terminal device can register with the network through only one of the satellites. However, the AS state and NAS state of the terminal device are maintained only on the satellite with which it interacts. If it is necessary to support a plurality of satellites serving one terminal device, either the terminal device interacts with each satellite to complete registration, or all these satellites synchronize the AS state and NAS state of the terminal device, as well as terminal device context.

To address one or more of the problems mentioned above, the embodiments of the present application propose deploying a new network element on the ground. In the embodiments of the present application, the new network element is referred to as a first network element. The first network element may be used to store one or more of the following types of information: subscription data of terminal devices, authentication information of terminal devices, context of terminal devices, or state information of terminal devices (AS/NAS state).

For example, when the connection between the satellite and this network element is available, the first network element may record the AS/NAS state information of terminal devices that have completed registration on the satellite. When other satellites pass over the first network element and establish a connection with the first network element, these satellites synchronize AS/NAS state information of the registered terminal devices that is recorded by the first network element, and store the context, subscription data, security context (e.g., an authentication vector) of the terminal devices (if the above information is not stored on satellites).

In some implementations, the first network element may also be referred to as a local subscription server (LSS) to distinguish it from the HSS deployed on the satellite. The first network element may be an enhanced HSS deployed on the ground, or a ground-deployed network entity that has both the MME function and the HSS function. The first network element may be a network element in a 5G system, such as a unified data management (UDM)/unified data repository (UDR), or an AMF+UDM/UDR.

In addition, in some implementations, the first network element may further store ephemeris information of satellites.

Based on the introduction of the above first network element, the wireless communication method provided by the embodiments of the present application will be introduced in detail below with reference to FIG. 4.

FIG. 4 is a schematic flowchart of a wireless communication method provided by the embodiments of the present application. The method illustrated in FIG. 4 is described from the perspective of the interaction between a first network element and a second network element. For the first network element, reference may be made to the preceding description. The second network element is configured to perform mobility management for terminal devices, for example, the second network element may be an MME or an AMF. The second network element may be deployed on a satellite, or in other words, the second network element may be a functional entity on the satellite (satellites mentioned in the various embodiments of the present application may also be substituted with other types of non-terrestrial devices).

Referring to FIG. 4, in Step S410, the first network element receives first information related to a first terminal device transmitted by the second network element. The first terminal device may be a terminal device that is already registered with or attached to the second network element. Alternatively, the first terminal device may be a terminal device that transitions from an unregistered state or a detached state to a registered state or an attached state.

The first information may be relevant information of the first terminal device that is stored or maintained by the second network element after the first terminal device is registered with or attached to the second network element. For example, the first information may include one or more of the following: state information of the first terminal device, context information of the first terminal device, or security context information of the first terminal device.

In some implementations, the state information of the first terminal device may indicate the AS state and/or NAS state of the first terminal device. For example, the state information of the first terminal device is used to indicate that the first terminal device is in one or more of the following states: EMM-REGISTERED, EMM-DEREGISTERED, or ECM-IDLE, ECM-CONNECTED. As another example, the state information of the first terminal device is used to indicate that the first terminal device is in one or more of the following states: RM-DEREGISTERED, RM-REGISTERED, CM-IDLE, or CM-CONNECTED.

In some implementations, the context information (UE context) of the first terminal device may, for example, include an identifier for paging the first terminal device, such as a 5G globally unique temporary UE identity (5G-GUTI).

In some implementations, the security context information (security context) of the first terminal device may include AS security context information and/or NAS security context information. For example, the security context information of the first terminal device includes one or more security-related parameters, such as one or more keys, encryption algorithms, or the security capability of the first terminal device.

In some implementations, in an example where the first network element is located on the ground and the second network element is located on a satellite, Step S410 may be performed when a feeder link is available. Correspondingly, the first terminal device may be a terminal device that registers with the second network element when the service link is available.

In some implementations, the first network element may transmit second information to a third network element. The third network element is configured to store subscription data of terminal devices. The third network element may be located on a satellite. In some implementations, the third network element and the second network element may be the same network element, or the third network element may be replaced by the second network element. The third network element may, for example, be a mobility management element, such as an MME or an AMF. In other implementations, the third network element may also be an HSS on the satellite. The second information may be used to update the subscription data stored in the third network element.

The second information may include one or more of the following:
subscription data of a second terminal device; or
security parameters related to authentication and authorization of the second terminal device.

The second terminal device mentioned above is a terminal device that fails to register with or attach to the second network element. The reason for a registration or attachment failure of the second terminal device may be that the third network element does not store the subscription data of the second terminal device and/or the security parameters related to authentication and authorization of the second terminal device. In this case, the third network element may obtain the subscription data of the second terminal device and/or the security parameters of the second terminal device via the first network element.

In some implementations, the first network element may transmit the first information when the feeder link of the satellite is available.

In some implementations, the second information may be transmitted based on a request. For example, before the first network element transmits the second information to the third network element, the first network element receives third information transmitted by the third network element. The third information is used to request the second information.

In some implementations, the third information may include one or more of the following:
an identifier of the second terminal device;
an identifier of a satellite where the third network element is located; or
an area where the second terminal device is located when initiating an attach request or a registration request, such as a tracking area indicator (TAI), a cell ID, or latitude and longitude information; where the area may be provided by the first terminal device, or may be determined by the satellite based on a coverage area or service area when receiving the attach request or the registration request from the first terminal device; or
a residence time of the second terminal device in the area.

In some implementations, a first access network device (which may be located on the same satellite as the second network element mentioned above, hereinafter referred to as the first satellite) transmits broadcast information. Correspondingly, the first terminal device receives the broadcast information from the first network device. For example, when a service link between the first terminal device and the first access network device is available, the first terminal device receives the broadcast information from the first network device.

The broadcast information may be used to indicate one or more of the following: indication information (S&F satellite operation indication) indicating that the first satellite is in a store and forward mode or supports a storage mode; identifiers of terminal devices served by the first satellite; or an identifier of the first satellite.

In some implementations, before Step S410, the first terminal device transmits an attach request or a registration request to the second network element. This step may be performed when the service link of the satellite where the second network element is located is available. Step S410 may be performed under certain conditions, for example, in a case where the first terminal device supports the store and forward mode, the first terminal device transmits an attach request or a registration request to the second network element.

The first terminal device may transmit an attach request or a registration request to all satellites, or the first terminal device may transmit an attach request or a registration request only to a serving satellite of the first terminal device (e.g., the satellite where the second network element is located). If the first terminal device transmits the attach request or registration request only to the serving satellite of the first terminal device, the first terminal device can identify a satellite as its serving satellite in the following methods.

In method 1, the first terminal device is locally configured with serving satellite identification information (serving satellite ID list). If a satellite identifier detected by the first terminal device from the broadcast message of the first satellite belongs to the locally pre-configured serving satellite ID list, the first terminal device determines that the first satellite is its serving satellite.

In method 2, the first terminal device detects the identifier of the first terminal device or the identification information of the group to which the first terminal device belongs via the first satellite (the satellite can broadcast, through broadcast information, the identifiers of the terminal devices that it serves or the identifier of the terminal device group that it serves).

In method 3, the first terminal device receives a satellite ID list (or a serving satellite ID list, the satellite ID list mentioned in the embodiments of the present application may also be referred to or replaced by a satellite identifier set) transmitted from the second network element, and the first terminal device determines that the first satellite is its serving satellite. The satellite ID list may be transmitted by the second network element to the first terminal device in a downlink NAS message. The downlink NAS message mentioned here may include one or more of the following messages: an attach reject message, an attach request message, an attach accept message, a service accept message, a tracking area update accept (TAU accept) message, a registration accept message, a registration reject message, or a PDU session establishment accept message. The first terminal device may determine the satellite that can serve the first terminal device (or a satellite that can serve it next) based on the satellite ID list. Satellites in the satellite ID list may be satellites that store one or more of the following: context of the first terminal device, subscription information of the first terminal device, or security context of the first terminal device (e.g., an authentication vector and/or a security key). After receiving the downlink NAS message, the first terminal device may transmit an uplink NAS message (e.g., the next uplink NAS message) only to the satellites in the satellite ID list. The uplink NAS message mentioned here may include one or more of the following messages: an attach request message, a registration request message, a service request message, a TAU request message, or a PDU session establishment request message. The first terminal device may transmit an uplink NAS message before receiving the downlink NAS message. The downlink NAS message may correspond to the uplink NAS message. For example, the downlink NAS message may be an attach reject message, an attach request message, or an attach accept message, and the uplink NAS message may be an attach request message. As another example, the downlink NAS message may be a service accept message, and the uplink NAS message may be a service request message. As another example, the downlink NAS message may be a registration accept message or a registration reject message, and the uplink NAS message may be a registration request message. As another example, the downlink NAS message may be a TAU accept message, and the uplink NAS message may be a TAU request message. As another example, the downlink NAS message may be a PDU session establishment accept message or a PDU session establishment accept message, and the uplink NAS message may be a PDU session establishment request message. In some implementations, when providing the satellite ID list, the second network element may also provide one or more of the following information: a valid time or applicable area of the satellite ID list. The applicable area of the satellite ID list may include one or more of the following: a registration area of the first terminal device, or a first area (the first area may be associated with (or determined based on) one or more of the following: a PLMN ID, a TAI, or a cell ID). After receiving the valid time and/or applicable area of the satellite ID list, the first terminal device may use the satellite ID list within the valid time and/or applicable area.

In some implementations, the attach request or registration request transmitted by the first terminal device may include one or more of the following information:
indication information (S&F satellite operation indication), indicating whether the first terminal device supports a storage mode;
an identifier of the first terminal device, such as a subscription permanent identifier (SUPI), a subscription concealed identifier (SUCI), a permanent equipment identifier (PEI), a temporary mobile subscriber identity (TMSI), a GUTI, a 5G-S-TMSI, or a globally unique AMF identifier (GUAMI);
an identifier of a group to which the first terminal device belongs; or
an identifier of a serving satellite of the first terminal device, where this satellite identifier may refer to a single satellite identifier or a set of satellite identifiers.

In some implementations, the first terminal device receives a response message to the attach request or the registration request, where the response message is used to indicate acceptance of the attach request or registration request of the first terminal device.

In some implementations, the first terminal device receives a response message to the attach request or the registration request, where the response message is used to indicate rejection of the attach request or registration request of the first terminal device. The response message may include one or more of the following:
a rejection reason for attachment or registration of the first terminal device (e.g., the rejection reason may include that a third network element does not store subscription data of the first terminal device and/or security parameters related to authentication and authorization of the first terminal device. The third network element mentioned here may be located on a satellite (e.g., on the same satellite as the second network element). In some implementations, the third element and the second network element may be the same entity, or the third network element may be replaced by the second network element. The third network element may, for example, be a mobility management element, such as an MME or an AMF. In other implementations, the third network element may also be an HSS on the satellite);
an identifier of the first terminal device; or
an identifier of a satellite where the second network element is located.

In some implementations, after receiving an attach complete message, the first terminal device may report an area where the first terminal device is located and/or a residence time of the first terminal device in the area. The above information may be transmitted, for example, in a case where the second network element rejects the attach request of the first terminal device.

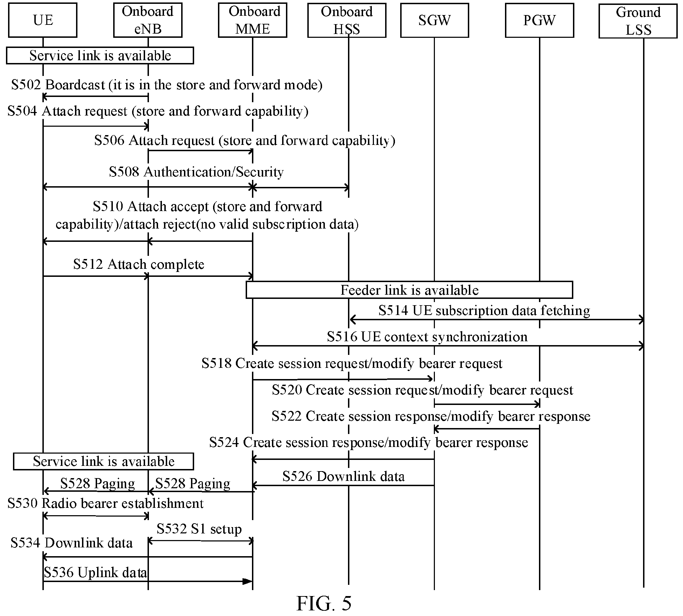

The embodiments of the present application will be described in more detail with reference to specific examples. In the example in FIG. 5, the first network element mentioned above is an LSS on the ground; the second network element, the third network element, and the first access network are an MME, HSS, and eNB deployed on the same satellite respectively; and the first terminal device is a UE. It should be noted that the example in FIG. 5 is only intended to help those skilled in the art to understand the embodiments of the present application, and is not intended to limit the embodiments of the present application to the specific numerical values or specific scenarios illustrated. Those skilled in the art can obviously make various equivalent modifications or variations based on the example illustrated in FIG. 5, and such modifications or variations also fall within the scope of the embodiments of the present application.

In this example, when the service link is available, the UE interacts with a satellite to complete the attach procedure; when the feeder link is available, the satellite interacts with a ground station to synchronize UE state information, context information, and subscription data.

As illustrated in FIG. 5, when the service link is available, the UE may interact with the satellite to complete the attach procedure based on the broadcast information of the satellite. The terminal device can complete an attach without PDN connectivity in the following two cases. The first case is that the UE initiates an attach request and the HSS on the satellite happens to have the stored subscription data of the UE and security parameters related to authentication and authorization of the UE (e.g., an authentication vector and a security key). The second case is that the UE learns from the broadcast message of the satellite that this satellite serves the terminal device group to which the UE belongs, that is, the satellite has stored the necessary information for the UE to complete the attach without PDN connectivity, and thus the UE initiates the attach procedure. The specific procedure illustrated in FIG. 5 is as follows.

In Step S502, when the service link between the satellite and the UE is available, the satellite broadcasts one of the following messages within a target area:
a. S&F satellite operation indication, indicating that the satellite is in a store and forward mode, or in other words, the satellite supports the store and forward mode;
b. satellite identification information;
c. the group identifier or UE identification information of UEs served by the satellite.

In Step S504, if the UE supports the store and forward mode, the UE transmits an attach request message to the satellite. The UE may transmit the attach request to all satellites or only to a serving satellite of the first terminal device. The UE can identify a satellite as its serving satellite in the following methods.

a. The UE is locally configured with satellite identification information (serving satellite ID list) of all serving satellites of the UE, and the satellite identifier detected by the UE from a broadcast message is within a locally pre-configured serving satellite ID list of the UE.

b. Alternatively, the UE detects identification information of the UE or identification information of the terminal device group to which the UE belongs.

The attach request message includes one or more of the following information:
(a) whether S&F satellite operation is supported;
(b) UE identification information, such as SUPI, SUCI, PEI, TMSI, GUTI, 5G-S-TMSI, GUAMI, or other identification information used to identify the UE;
(c) group identification information, such as the identification information of the terminal device group to which the UE belongs; or
(d) satellite identification information, which may be the identification information of the serving satellite of the UE, and may be a single satellite identifier or a set of satellite identifiers.

In Step S506, the access network device on the satellite transmits an attach request message to the MME deployed on the satellite. The MME checks whether the UE has the capability to support the S&F satellite operation; if not, the MME rejects the attach request with an appropriate cause value.

In Step S508, the UE interacts with the network entity on the satellite to complete the authentication and NAS security procedure. If the HSS on the satellite does not store the subscription data corresponding to the UE and the security parameters related to authentication and authorization corresponding to the UE (e.g., an authentication vector (AV) and a security key), then this procedure fails.

In Step S510, the MME transmits an attach accept message to the access network device in an S1-AP initial context setup request message or a DL NAS transport message. In the attach accept message, the MME indicates one or more of the following: the capability of the MME to support the S&F satellite operation, or a serving satellite ID list. Furthermore, in a case where the attach accept message indicates a serving satellite ID list, the attach accept message may also indicate one or more of the following information about the serving satellite ID list: a valid time, or an applicable area. Then, the access network device forwards the attach accept message to the UE. If the UE has not included an ESM message container in the attach request in Step S504, the following steps are skipped. If the UE has included the ESM message container in the attach request in Step S504, the MME allocates an EPS bearer identity for the default bearer associated with the UE. The EPS QoS information can be set to the default value received from the HSS. If the authentication and NAS security procedure in Step S508 fails, the MME transmits an attach reject message to the UE via the access network device, where the message includes one or more of the following information:
a. attach reject indication;
b. an attach reject reason, for example, the subscription data corresponding to the UE and the security parameters related to authentication and authorization corresponding to the UE are not stored in the satellite;
c. UE identification information;
d. satellite identification information; or
e. a serving satellite ID list (which may further include the valid time and/or applicable area of the serving satellite ID list).

In Step S512, the UE transmits an attach complete message to the MME. If the UE receives an attach reject message, Step S514 is not performed. Optionally, the UE may report area information of the area where the UE is located and/or an expected residence time of the UE in the area.

In Step S514, when the feeder link is available, the HSS on the satellite interacts with the LSS on the ground to update one or more of the subscription data corresponding to the UE or the security parameters related to authentication and authorization corresponding to the UE. Specifically, a network entity on the satellite (an MME or an HSS) records the identifier of the UE whose attachment failed due to the absence of the valid subscription data corresponding to the UE and the security parameters related to authentication and authorization corresponding to the UE. When the feeder link is available, the satellite interacts with the ground station to obtain the subscription data and security parameters related to authentication and authorization of the UE from the LSS on the ground. For example, the HSS on the satellite may transmit a UE subscription data fetching request to the LSS on the ground, where the request message includes one or more of the following information:
a. UE identification information;
b. satellite identification information;
c. area information of an area where the UE is located when initiating registration, e.g., a TAI, a cell ID, or latitude and longitude information, which may be provided by the UE, or may be derived by the satellite based on the coverage area or service area when receiving the attach request from the UE; or
d. the residence time of the UE in the area.

The LSS on the ground may record (or may not record) the information included in the above request message, and transmits the requested UE subscription data and security parameters related to authentication and authorization to the HSS on the satellite.

In Step S516, when the feeder link is available, a functional entity on the satellite may also transmit information related to a successfully registered UE to the LSS deployed on the ground. The information related to the registered UE includes at least one of the following:
a. UE AS/NAS state information (e.g., the UE is in an ECM_IDLE state, or the UE is in an EMM-REGISTERED state);
b. UE context, e.g., including UE identification information used for paging such as GUTI; or
c. security context, e.g., AS security context and NAS security context; specifically, it may include security-related parameters such as keys, encryption algorithms, and UE security capability

It should be noted that the UE enters an EMM-REGISTERED state through a successful attach procedure for registering with E-UTRAN or GERAN/UTRAN. The MME enters the EMM-REGISTERED state through a successful tracking area update procedure for the UE to select an E-UTRAN cell from GERAN/UTRAN, or through an attach procedure via E-UTRAN. In the EMM-REGISTERED state, the UE can receive services that require registration in the EPS.

It should also be noted that when there is no NAS signaling connection between the UE and the network, the UE is in an ECM-IDLE state.

It should also be noted that there is no strict sequential order between Step S514 and Step S516.

In Step S518, if the UE has included an ESM message container in the attach request in Step S504, the MME transmits a create session request message and a modify bearer request message to the SGW when the feeder link is available.

In Step S520, the SGW transmits a create session request message and a modify bearer request message to the PGW.

In Step S522, the PGW returns a create session response and a modify bearer response to the SGW.

In Step S524, the SGW returns a create session response and a modify bearer response to the MME.

In Step S526, downlink data may be transmitted from the S/PGW to the MME, and the MME receives and stores the downlink data for the UE.

In Step S528, when the service link is available, that is, when the satellite covers the tracking area where the UE is registered, the MME transmits a paging message to the eNB. If the eNB receives the paging message from the MME, the UE is paged by the eNB.

In Step S530, the UE establishes a radio bearer for downlink data transmission.

In Step S532, an S1-MME path is established for downlink data transmission.

In Step S534, the MME transmits the downlink data to the UE.

In Step S536, uplink data may also be transmitted to the MME.

The example in FIG. 5 illustrates a method for synchronizing UE subscription data and security parameters between the HSS on the satellite and the LSS on the ground, and it also provides the network processing flows for both scenarios: where the network functional entity on the satellite has the UE subscription and security parameters stored, and where it does not have such information stored. In the example in FIG. 5, the management and maintenance of UE state information in the entire network is accomplished by a new network element, i.e., the LSS, and the UE subscription data and security parameters can be updated on and synchronized to the HSS on the satellite, enabling a plurality of satellites to serve the same UE without requiring the UE to register with each satellite, thereby improving the efficiency of the entire satellite network in serving the UE.

In some implementations, the first network element transmits the above first information to a fourth network element. The fourth network element may be configured to perform mobility management for terminal devices. For example, the fourth network element may be an MME, and the fourth network element does not have the first information stored. Illustratively, the fourth network element and the above second network element may be deployed on two different satellites. A satellite where the second network element is located may be referred to as a first satellite, and a satellite where the fourth network element is located may be referred to as a second satellite. That is, after the first network element obtains the state information, context information of the registered first terminal device from the first satellite, the first network element may transmit the first information to the second satellite that does not have the first information stored. In this way, the first terminal device does not need to also transmit an attach request or a registration request to the mobility management element on the second satellite.

The first network element may transmit the first information to the fourth network element when the feeder link of the second satellite is available. In some implementations, the first network element stores ephemeris information of satellites, and the satellite where the fourth network element is located is determined based on the ephemeris information. For example, the first network element may determine, based on the ephemeris information, that the coverage area of the second satellite (or of the access network device on the second satellite) includes the registration area of the first terminal device. In this case, the first network element can determine that the fourth network element may provide service to the first terminal device. Therefore, the first network element may transmit the first information to that fourth network element.

In some implementations, the first network element transmits fourth information (including the subscription data of the first terminal device and/or security parameters related to authentication and authorization of the first terminal device) to a fifth network element. The fifth network element is configured to store subscription data of terminal devices, and the fifth network element does not have the fourth information stored. For example, the above second network element is the MME on the first satellite, and the fifth network element mentioned here is an HSS on the second satellite. The first network element may determine, based on the ephemeris information, that the coverage area of the second satellite (or of the access network device on the second satellite) includes the registration area of the first terminal device. In this case, the first network element can determine that the fifth network element may provide service to the first terminal device. Since the fifth network element does not have the first terminal device's subscription data and/or security parameters related to authentication and authorization stored, the first network element may transmit the fourth information to the fifth network element.

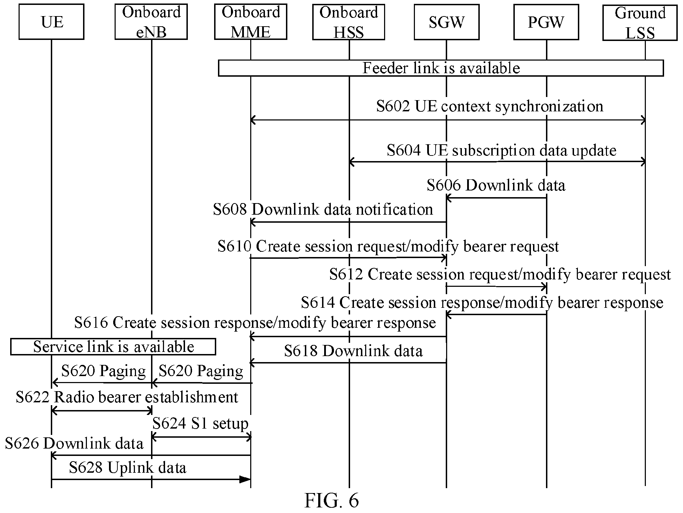

The embodiments of the present application will be described in more detail with reference to specific examples. In the example illustrated in FIG. 6, the fourth network element and the fifth network element are the MME and HSS located on the same satellite (one different from the satellite where the above first network element is located) respectively, and the first terminal device is a UE. It should be noted that the example illustrated in FIG. 6 is only intended to help those skilled in the art to understand the embodiments of the present application, and is not intended to limit the embodiments of the present application to the specific numerical values or specific scenarios illustrated. Based on the example illustrated in FIG. 6, those skilled in the art can clearly make various equivalent modifications or variations, and such modifications or variations also fall within the scope of the embodiments of the present application.

In the example illustrated in FIG. 6, if the next satellite passing over the ground station where the data network is located (or in other words, the next satellite with an available feeder link) does not have the state information of the UE, UE context information of the UE, or subscription data and security parameters of the UE, the LSS needs to interact with the HSS and MME on this satellite. Additionally, in this case, if there is downlink data to be transmitted, the data also needs to be transmitted to the satellite when the feeder link is available and stored in the network entity on the satellite, and then delivered to the UE when the service link becomes available. The specific procedure is as follows.

In Step S602, when the feeder link is available, the LSS interacts with the MME on the satellite. If the UE state in the LSS deployed on the ground is registered, such as EMM-REGISTERED, but the MME on the satellite does not have the UE context and state information of the UE, the LSS transmits the AS/NAS state information of the registered UE (e.g., the UE is in the ECM_IDLE state, the UE is in EMM-REGISTERED state), and/or the UE context of the registered UE, and/or security context of the registered UE to the MME deployed on the satellite.

In Step S604, when the feeder link is available, the LSS interacts with the HSS on the satellite. If the MME on the satellite does not have the subscription data and security parameters of the registered UE, the LSS transmits the subscription data of the registered UE and security parameters related to authentication and authorization of the registered UE to the HSS deployed on the satellite.

The LSS may select a satellite that will cover the registration area of the UE in the future based on the ephemeris information of satellites, and synchronize to that satellite the registered UE's UE state information of, UE context, security context, and UE subscription data and security parameters.

It should be noted that Step S604 may also occur before Step S602.

It should also be noted that if there is no downlink data to be transmitted, it is unnecessary to perform the subsequent steps.

In Step S606, when there is downlink data to be transmitted, if the context of the SGW indicates that there is no downlink user plane tunnel end point identifier (TEID) towards the MME, the SGW buffers the data.

In Step S608, the SGW transmits a downlink data notification message to the MME on the satellite. This message includes allocation and retention priority (ARP) and an EPS bearer ID.

In Step S610, refer to Step S518 to Step S536 illustrated in FIG. 5 for Step S610 to Step S628.

The example illustrated in FIG. 6 solves the problem of synchronizing to a satellite that has not interacted with the UE the AS/NAS state, UE context, subscription data, and security parameters of the UE, so that the UE state on the satellite that has not interacted with the UE is registered, such as EMM-REGISTERED, and so that the satellite that has not interacted with the UE can also support storing and forwarding data for a UE that has completed registration on another satellite.

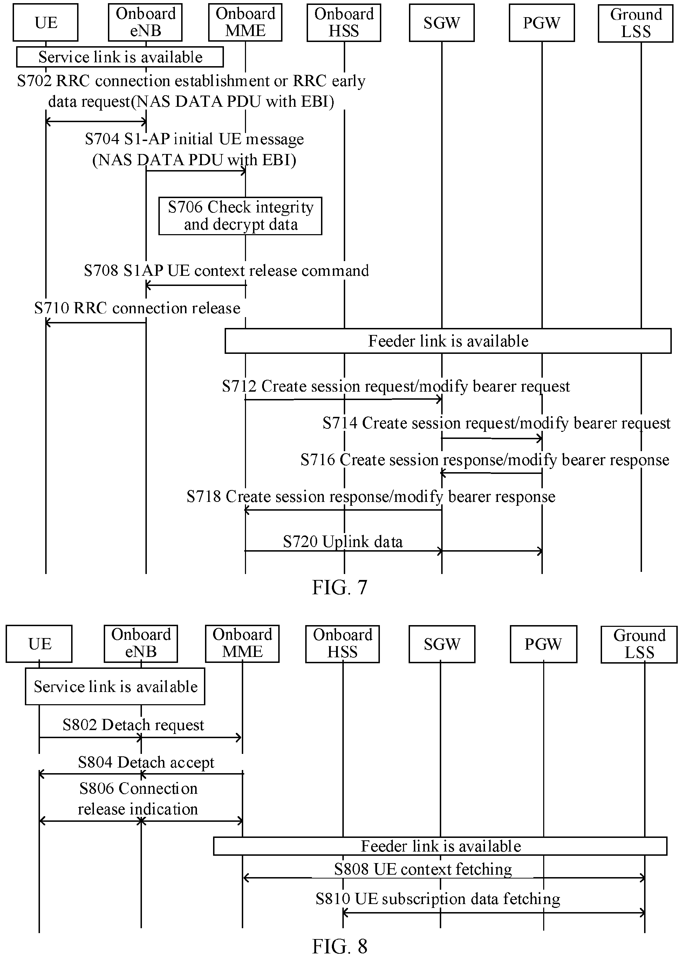

In some implementations, the first terminal device transmits uplink data to the second network element, and the second network element stores the uplink data. Furthermore, in some implementations, after storing the uplink data, the second network element triggers the first access network device to release an RRC connection of the first terminal device. The process of transmitting uplink data from a registered first terminal device will be introduced below with reference to FIG. 7.

As illustrated in FIG. 7, in a case where there is uplink data to be transmitted, the registered UE may establish an RRC connection with an access network device on the satellite when the service link is available and store the uplink data in a network entity on the satellite, and then the RRC connection is released. When the feeder link is available, a general packet radio service tunneling protocol (GTP) tunnel is established between the MME and the SGW/PGW for the transmission of the uplink data. The specific procedure is as follows.

In Step S702, when the service link is available and there is uplink data to be transmitted, the UE establishes an RRC connection with an access device deployed on the satellite, or transmits an RRC early data request (RRCEarlyDataRequest), includes therein an integrity-protected NAS DATA PDU. The NAS DATA PDU carries the EPS bearer ID and the encrypted uplink data. For a PDN connectivity of an IP PDN type configured to support header compression, the UE should apply header compression before encapsulating the data into the NAS message.

In Step S704, the NAS DATA PDU transmitted in Step S702 is forwarded by the access network device to the MME via an S1-AP initial UE message. If an RRCEarlyDataRequest message was received in Step S402, the access network device includes an "early data transmission (EDT) session" indicator in the S1-AP initial UE message.

In Step S706, the MME checks the integrity of the incoming NAS DATA PDU and decrypts the data the NAS DATA PDU contains.

In Step S708, after the UL data transmission is completed, the UL data is stored in a network entity on the satellite, such as the MME. The MME on the satellite transmits an S1AP UE context release command to the access network device.

In Step S710, the access network device releases the RRC connection with the UE.

In Step S712 to Step S718, a GTP tunnel is established between the MME and the SGW/PGW for the transmission of uplink data.

In Step S720, the uplink data is transmitted.

The difference between the procedure in the example illustrated in FIG. 7 and the conventional procedure of mobile originated data transport in control plane CIoT EPS optimisation with P-GW connectivity is that after completing uplink data transmission, the UE first releases the RRC connection and stores the data on the satellite. Subsequently, when the feeder link is available, a tunnel between the MME and the S/PGW GTP is established for the transmission of the uplink data. In the conventional procedure, the RRC connection and the GTP tunnel are established first, and after the uplink and downlink data transmission is completed, the RRC connection between the UE and the access network device is released. The example illustrated in FIG. 7 may be used for a UE to store and forward uplink data to a remotely deployed data network on the ground through any satellite that has the stored UE state information, UE context, security context, and subscription data of the UE. For example, a ship sailing on the ocean may report its sailing status to an onshore management authority. The example illustrated in FIG. 7 allows a plurality of satellites to transmit data for the UE in turn, thereby increasing the probability that the UE data is successfully stored and forwarded, and reducing the waiting latency for related services.

In some implementations, the first terminal device transmits a detach or deregistration request to the second network element. Then, the first terminal device receives a detach or deregistration accept message transmitted by the first access network device. This message may, for example, be carried in a paging message. Carrying the detach or deregistration accept message in a paging message can simplify the detach or deregistration procedure.

In some implementations, after the first terminal device detaches or deregisters, the second network element may transmit fifth information (e.g., a detach or deregistration request) to the first network element. The fifth information may be used to indicate that a state of the first terminal device is switched from a registered state to a deregistered state. After receiving the fifth information, the first network element performs one or more of the following operations: updating the state of the first terminal device stored in the first network element to the deregistered state, or deleting the context information and/or security context information of the first terminal device.

In some implementations, after the first terminal device detaches or deregisters, the third network element may delete the second information, thereby saving storage space on the satellite. The third network element may be located on the satellite (e.g., on the same satellite as the second network element). In some implementations, the third network element and the second network element may be the same network element; or the third network element may be replaced by the second network element. The third network element may be, for example, a mobility management element, such as an MME or an AMF. In other implementations, the third network element may also be an HSS on the satellite.

In some implementations, if the state of the first terminal device is switched from the registered state to the deregistered state, and the first network element has synchronized the state of the first terminal device, but the fourth network element (e.g., an MME located on a different satellite than the second network element) has not yet synchronized the state of the first terminal device, then the first network element may transmit sixth information (the seventh information may be, for example, a detach request) to the fourth network element, and the sixth information is used to indicate that the state of the first terminal device is switched from the registered state to the deregistered state. In response to the sixth information, the fourth network element switches its stored state of the first terminal device from the registered state to the deregistered state.

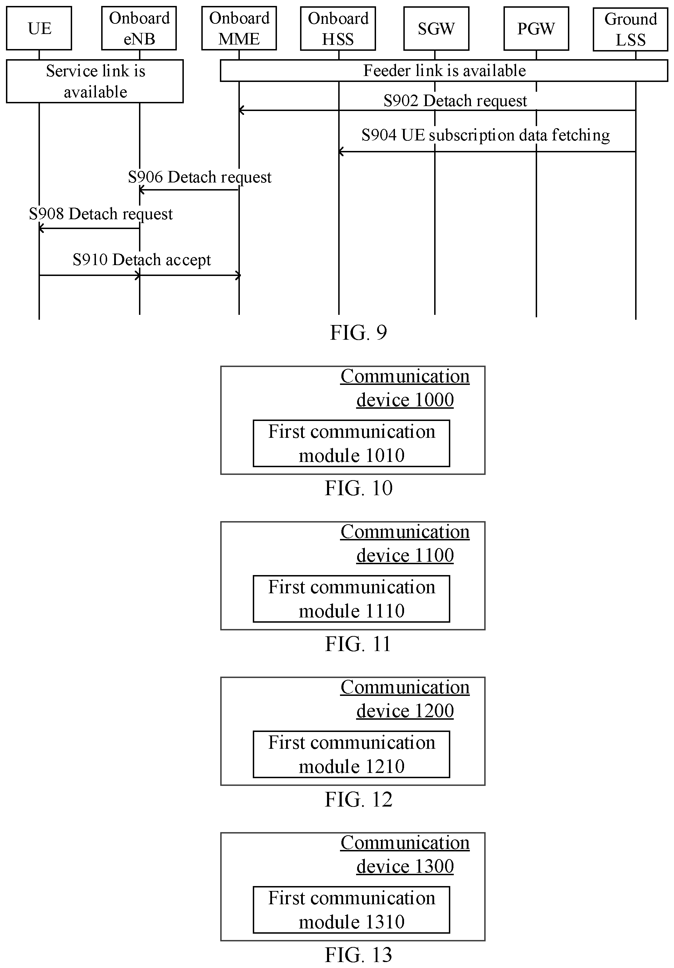

The embodiments of the present application will be introduced in more detail with reference to specific examples. It should be noted that the examples illustrated in FIGS. 7 and 8 are only intended to help those skilled in the art to understand the embodiments of the present application, and are not intended to limit the embodiments of the present application to the specific numerical values or specific scenarios illustrated. Based on the examples illustrated in FIGS. 8 and 9, those skilled in the art can clearly make various equivalent modifications or variations, and such modifications or variations also fall within the scope of the embodiments of the present application.

FIG. 8 is a schematic diagram of a UE-initiated detach procedure provided by the embodiments of the present application.

As illustrated in FIG. 8, when the UE no longer needs to be registered in the network, it can initiate a detach procedure.

In Step S802, when the service link is available, the UE transmits a detach request message to the MME via the access network device on the satellite. The message includes UE identification information such as the GUTI.

In Step S804, the MME transmits a detach accept message to the UE.

In Step S806, the connection between the UE and the access network device on the satellite is released, as well as the S1-MME signaling connection established for this UE.

In Step S808, when the feeder link is available, the MME transmits a detach request to the LSS. The LSS deletes the locally stored UE-related information, such as UE context and security context, and switches the UE state to the deregistered state. When other satellites connect to the LSS, the LSS triggers those other satellites to detach the UE. For the specific procedure, refer to the example illustrated in FIG. 9.

In Step S810, the HSS on the satellite deletes the subscription data and security parameters of the UE. This action mainly occurs when the storage space on the satellite becomes insufficient which is primarily caused by the update of the subscription data and security parameters of the registered UE by the LSS to the HSS on the satellite.

The example in FIG. 8 and the example in FIG. 9 below together illustrate how a UE implements deregistration from all its serving satellites via a single satellite. FIG. 8 mainly solves the problem of synchronizing the UE state information in the LSS after the UE initiates a detach procedure. By having the LSS interact with the serving satellites on behalf of the UE to complete deregistration, the signaling load caused by the UE repeatedly interacting with all satellites is avoided. Furthermore, the UE does not need to keep monitoring all satellites serving it; after interacting with any single satellite, it can stop working (e.g., power off, enter an analysis mode), thereby reducing the power consumption of the UE.

FIG. 9 is a schematic diagram of an LSS-initiated detach procedure provided by the embodiments of the present application.

In the example illustrated in FIG. 9, when an LSS deployed on the ground expects to interact with any satellite, the LSS can initiate a detach procedure to synchronize the UE state on the satellite, or an operator node can deregister the UE. The specific procedure is as follows.

In Step S902, when the feeder link is available, the LSS transmits a detach request to the MME on the satellite. The detach request includes UE identification information such as the GUTI.

Step S904 is the same as Step S810 in the embodiment shown in FIG. 8.

In Step S906, the MME transmits a detach request to the access network device.

In Step S908, the access network device pages the UE using the UE identity (GUTI) of the deregistered UE, and the UE receives a detach request message after the connection between the UE and the access network device on the satellite is established. The paging message may directly carry the attach request message that includes UE identification information and the detach reason, for example, the UE has overdue payment, or the UE has already completed the detach procedure on another satellite.

In Step S910, the UE returns a detach accept message to the MME on the satellite. Certainly, the UE may implicitly accept detachment without performing Step S910.

In the example illustrated in FIG. 9, the LSS deployed on the ground can interact with satellites (e.g., all satellites) to initiate a detach procedure from the network side. By taking into account the storage space usage on the satellite, the context information, subscription data, and security parameters of a detached UE can be deleted to release storage space on the satellite for storing related information of UEs in the registered state, thus ensuring efficient utilization of the storage space on the satellites. Furthermore, carrying the detach request in the paging message can further simplify the detach procedure, allowing it to be completed in a shorter time, which avoids the signaling overhead and power consumption caused by the release of the connection with the network by the UE after the UE receives a paging message, establishes a connection with the network, and receives the detach request message. This example is particularly applicable to scenarios where low-orbit satellites serve UEs, since such satellites have high mobility and the service link availability time is relatively short, making it more necessary to complete the interaction with the UE in a shorter time.

From the examples illustrated in FIGS. 5 to 9, it can be seen that, in order to support the scenario where a plurality of satellites serve a UE under a deployment architecture with the HSS and MM located on satellites, this solution introduces a new network element, the LSS deployed on the ground, to manage and maintain the information in the network such as UE state information, UE context, security context, UE subscription data, and security parameters related to authentication and authorization. The following enhancements are made to the existing attach/detach procedure.

Firstly, when the UE initiates an attach/detach procedure, the satellite performing the attach/detach procedure needs to interact with the LSS deployed on the ground when the feeder link is available. The LSS needs to store and synchronize local information such as UE state information, UE context, and security context.

Secondly, when any satellite has an available feeder link to the LSS deployed on the ground, the LSS needs to synchronously update the relevant information of registered UEs to satellites whose future coverage area includes the registration area of the UE, and the LSS also needs to notify or update the related state of the deregistered UE to all satellites maintaining the UE state, and release UE subscription data and security parameters related to authentication and authorization based on satellite storage space usage and operator policies.

Additionally, a satellite that does not directly interact with the UE but has the above UE-related information stored can directly support storing and forwarding uplink and downlink data for the UE.

It should be noted that the network elements mentioned in the various embodiments above may all refer to core network elements.

The method embodiments of the present application have been described in detail above. The apparatus embodiments of the present application will be described in detail below. It should be understood that the description of the method embodiments correspond to that of the apparatus embodiments; therefore, for parts not described in detail, reference may be made to the preceding method embodiments.

FIG. 10 is a block diagram of a communication device provided by the embodiments of the present application. The communication device 1000 illustrated in FIG. 10 may be the first network element 1010 in the preceding text. The communication device 1000 includes a first communication module 1010 configured to receive first information transmitted by a second network element; where the first information includes one or more of following information: state information of a first terminal device; context information of the first terminal device; or security context information of the first terminal device; where the second network element is configured to perform mobility management for terminal devices.

In some implementations, the first network element is deployed on the ground; and/or the second network element is deployed on a satellite.

In some implementations, the first communication module is further configured to: transmit second information to a third network element; where the second information includes one or more of following information: subscription data of a second terminal device; or security parameters related to authentication and authorization of the second terminal device; where the third network element is configured to store subscription data of terminal devices, and the second terminal device is a terminal device that fails to register with or attach to the second network element.

In some implementations, the third network element is located on a satellite.

In some implementations, the first communication module is further configured to: receive third information transmitted by the third network element before the first network element transmits the second information to the third network element; where the third information is used to request the second information.

In some implementations, the third information includes one or more of the following information:
an identifier of the second terminal device;
an identifier of a satellite where the third network element is located;
an area where the second terminal device is located when initiating an attach request or a registration request; or
a residence time of the second terminal device in the area.

In some implementations, a reason for a registration or attachment failure of the second terminal device is that the third network element does not store the subscription data of the second terminal device and/or the security parameters related to authentication and authorization of the second terminal device.

In some implementations, the first communication module is further configured to:
transmit the first information to a fourth network element; where the fourth network element is configured to perform mobility management for terminal devices, and the fourth network element does not store the first information.

In some implementations, the fourth network element and the second network element are located on different satellites.

In some implementations, the first network element stores ephemeris information of satellites, and a satellite where the fourth network element is located is determined based on the ephemeris information.

In some implementations, a coverage area of an access network device located on the same satellite as the fourth network element includes a registration area of the first terminal device.

In some implementations, the first communication module is further configured to:
subscription data of the first terminal device; or
security parameters related to authentication and authorization of the first terminal device;
where the fifth network element is configured to store subscription data of terminal devices, and the fifth network element does not store the fourth information.

In some implementations, the fifth network element and the second network element are located on different satellites.

In some implementations, the first communication module is further configured to:
receive fifth information transmitted by the second network element; where the fifth information is used to indicate a state of the first terminal device is switched from a registered state to a deregistered state.

In some implementations, the communication device further includes:
an execution module, configured to, in response to the fifth information, perform one or more of following operations:
updating the state of the first terminal device stored in the first network element to the deregistered state; or
deleting the context information of the first terminal device and/or the security context information of the first terminal device.

In some implementations, the first communication module is further configured to:
transmit sixth information to a fourth network element; where the fourth network element is configured to perform mobility management for terminal devices, and the sixth information is used to indicate the fourth network element to switch the state of the first terminal device from the registered state to the deregistered state.

In some implementations, the fourth network element and the second network element are located on different satellites.

In some implementations, the first network element is one of:
an HSS;
an MME and an HSS;
a UDM/UDR;
an AMF and a UDM/UDR.

In some implementations, the security context information includes an authentication vector.

FIG. 11 is a block diagram of a communication device provided by the embodiments of the present application. The communication device 1100 illustrated in FIG. 11 may be a second network element, and the communication device 1100 includes: a first communication module 1110, configured to transmit first information to a first network element; where the first information includes one or more of following information: state information of a first terminal device; context information of the first terminal device; or security context information of the first terminal device; where the second network element is configured to perform mobility management for terminal devices.

In some implementations, the first network element is deployed on ground; and/or the second network element is deployed on a satellite.

In some implementations, the first communication module is further configured to:
receive uplink data from the first terminal device;
where the communication device 1100 further includes: a storage module, configured to store the uplink data.

In some implementations, the first communication module is further configured to:
transmit fifth information to the first network element after a state of the first terminal device is switched to a deregistered state; where the fifth information is used to indicate that the state of the first terminal device is the deregistered state.

In some implementations, the first communication module is further configured to:
receive seventh information transmitted by the first network element; where the seventh information is used to indicate that a state of a third terminal device is switched from a registered state to a deregistered state;
where the communication device further includes:
   a switching module, configured to, in response to the seventh information, switch the state of the third terminal device stored in the second network element from the registered state to the deregistered state.

In some implementations, the first communication module is further configured to:
receive an attach request or a registration request transmitted by the first terminal device before the second network element transmits the first information to the first network element; where the attach request or the registration request includes an identifier of a serving satellite of the first terminal device.

In some implementations, the first communication module is further configured to:
in response to that a third network element does not store subscription data of the first terminal device and/or security parameters related to authentication and authorization of the first terminal device, transmit a response message to the attach request or the registration request to the first terminal device; where the response message is used to reject the attach request or registration request of the first terminal device, the third network element is configured to store subscription data of terminal devices, and the third network element is associated with the second network element.

In some implementations, the second network element and the third network element are located on the same satellite.

In some implementations, the response message includes one or more of:
a rejection reason for attachment or registration of the first terminal device;
an identifier of the first terminal device; or
an identifier of a satellite where the second network element is located.

In some implementations, the rejection reason includes that the third network element does not store the subscription data of the first terminal device and/or the security parameters related to authentication and authorization of the first terminal device.

In some implementations, the security context information includes an authentication vector.

FIG. 12 is a block diagram of a communication device provided by the embodiments of the present application. The communication device 1200 illustrated in FIG. 12 may be a third network element, and the communication device 1200 includes: a first communication module 1210, configured to receive second information transmitted by a first network element; where the second information includes one or more of following information: subscription data of a second terminal device; or security parameters related to authentication and authorization of the second terminal device; where the third network element is configured to store subscription data of terminal devices, the second terminal device is a terminal device that fails to register with or attach to a second network element, the second network element is configured to perform mobility management for terminal devices, and the second network element is associated with the third network element.

In some implementations, the first network element is deployed on the ground; and/or the second network element and the third network element are located on the same satellite.

In some implementations, the first communication module is further configured to: transmit third information to the first network element before the third network element receives the second information transmitted by the first network element; where the third information is used to request the second information.

In some implementations, the third information includes one or more of the following:
an identifier of the second terminal device;
an identifier of a satellite where the third network element is located;
an area where the second terminal device is located when initiating an attach request or a registration request; or
a residence time of the second terminal device in the area.

In some implementations, the communication device further includes:
a deletion module, configured to, in response to a state of the second terminal device switching from a registered state to a deregistered state, delete the second information.

FIG. 13 is a block diagram of a communication device provided by the embodiments of the present application. The communication device 1300 illustrated in FIG. 13 may be a first terminal device, and the communication device 1300 includes a first communication module 1310 configured to transmit an attach request or a registration request to a second network element; where the second network element is configured to perform mobility management for terminal devices.

In some implementations, the second network element is located on a satellite.

In some implementations, the attach request or the registration request includes an identifier of a serving satellite of the first terminal device.

In some implementations, the first communication module is further configured to:
receive a response message to the attach request or the registration request; where the response message is used to reject the attach request or registration request of the first terminal device.

In some implementations, the response message includes one or more of the following:
a rejection reason for attachment or registration of the first terminal device;
an identifier of the first terminal device; or
an identifier of a satellite where the second network element is located.

In some implementations, the rejection reason includes that a third network element does not store the subscription data of the first terminal device and/or security parameters related to authentication and authorization of the first terminal device.

In some implementations, the third network element is configured to store subscription data of terminal devices, and the third network element is associated with the second network element.

In some implementations, the second network element and the third network element are located on the same satellite.

In some implementations, the first communication module is further configured to:
receive broadcast information from a first access network device before the first terminal device transmits the attach request or the registration request to the second network element; where the broadcast information includes one or more of:
an identifier of a first satellite where a first access network is located; or
an identifier of a terminal device or terminal device group served by the first satellite.

In some implementations, the first communication module is configured to: receive the broadcast information from the first access network device when a service link between the first terminal device and the first access network device is available.

In some implementations, the first access network and the second network element are located on the same satellite.

In some implementations, where that a first satellite where the second network element is located is a serving satellite of the first terminal device is determined based on one or more of:
information of a serving satellite configured for the first terminal device; or
broadcast information from an access network device on the first satellite, where the broadcast information is used to indicate identifiers of terminal devices served by the first satellite and/or an identifier of the first satellite.

In some implementations, the first communication module is further configured to:
transmit uplink data from the first terminal device to a first access network device; and
receive, by the first terminal device, a radio resource control (RRC) connection release message transmitted by the first access network device, after the uplink data is stored in a satellite where the first access network device is located.

In some implementations, the first communication module is further configured to:
transmit, by the first terminal device, a detach request or a deregistration request to the second network element; and
receive, by the first terminal device, a paging message transmitted by a first access network device; where the paging message is used to indicate that the detach request or the deregistration request is accepted;
where the first access network device and the second network element are located on the same satellite.

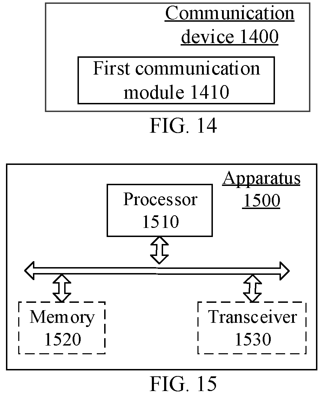

FIG. 14 is a block diagram of a communication device provided by the embodiments of the present application. The communication device 1400 illustrated in FIG. 14 may be a first access network device, and the communication device 1400 includes a first communication module 1410, configured to transmit broadcast information; where the first access network device is located on a first satellite, and the broadcast information is used to indicate one or more of:
identifiers of terminal devices served by the first satellite; or
an identifier of the first satellite.

In some implementations, the first communication module is further configured to:
transmit a paging message to the first terminal device after the first terminal device transmits a detach request or a deregistration request; where the paging message is used to indicate that the detach request or the deregistration request is accepted.

FIG. 15 is a block diagram of an apparatus used for communication according to the embodiments of the present application. The dashed lines in FIG. 15 indicate that the unit or module is optional. The apparatus 1500 may be configured to implement the methods described in the above method embodiments. The apparatus 1**500** may be a chip, a terminal device, or a core network device.

The apparatus 1500 may include one or more processors 1510. The processor 1510 may support the apparatus 1500 in implementing the methods described in the above method embodiments. The processor 1510 may be a general-purpose processor or a special-purpose processor. For example, the processor may be a central processing unit (CPU). Alternatively, the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor, or the like.

The apparatus 1500 may further include one or more memories 1520. The memory 1520 stores a program, which can be executed by the processor 1510, to enable the processor 1510 to perform the methods described in the above method embodiments. The memory 1520 may be independent of the processor 1510 or integrated into the processor 1510.

The apparatus 1500 may further include a transceiver 1530. The processor 1510 may communicate with other devices or chips via the transceiver 1530. For example, the processor 1510 may transmit and receive data with other devices or chips via the transceiver 1530.

The embodiments of the present application further provide a computer-readable storage medium, which is configured to store a program. The computer-readable storage medium is applicable to the communication device provided by the embodiments of the present application, and the program enables a computer to perform the methods performed by the communication device in the various embodiments of the present application.

The embodiments of the present application further provide a computer program product. The computer program product includes a program. The computer program product is applicable to the communication device provided by the embodiments of the present application, and the program enables a computer to perform the methods performed by the communication device in the various embodiments of the present application.

The embodiments of the present application further provide a computer program. The computer program is applicable to the communication device provided by the embodiments of the present application, and the computer program enables a computer to perform the methods performed by the communication device in the various embodiments of the present application.

It should be understood that, the terms "system" and "network" may be used interchangeably in the present application. In addition, the terminology used in the present application is only for the purpose of describing particular embodiments of the present application and is not intended to limit the present application. The terms "first", "second", "third" and "fourth" in the description and claims of the present application, as well as the drawings, are used to distinguish between different objects and not to describe a specific order. Furthermore, the terms "include" and "have", as well as any variations thereof, are intended to cover a non-exclusive inclusion.

In the embodiments of the present application, "indicate" mentioned in the embodiments of the present application may mean a direct indication, an indirect indication, or may mean that there is an association relationship. For example, A indicating B may mean that A directly indicates B, and for example, B may be acquired by A; it can also mean that A indirectly indicates B, and for example, A indicates C, and B may be acquired by C; alternatively, A indicating B may mean that there is an association relationship between A and B.

In the embodiments of the present application, "B corresponding to A" means that B is associated with A, and B can be determined based on A. However, it should also be understood that determining B based on A does not mean that B is determined solely based on A; B may also be determined based on A and/or other information.

In the embodiments of the present application, the term "corresponding" may mean that two elements are in a direct correspondence or an indirect correspondence, or may mean that there is an associative relationship between the two elements, or may mean a relationship of indicating and being indicated, or a relationship of configuring and being configured, or the like.

In the embodiments of the present application, "pre-defined" or "pre-configured" may be implemented by pre-storing corresponding codes, tables, or other manners that may be used to indicate relevant information in a device (e.g., including a terminal device and a network device), and its specific implementation isd not limited in the present application. For example, "pre-defined" may refer to that defined in the protocol.

In the embodiments of the present application, the "protocol" may refer to a standard protocol in the communications field, for example, "protocol" may be an LTE protocol, an NR protocol, or relevant protocol applied in future communication systems, which are not be limited in the present application.

In the embodiments of the present application, the term "and/or" herein is only an association relationship to describe associated objects, indicating that there may be three kinds of relationships; for example, "A and/or B" may represent three cases where: A exists alone, both A and B exist, and B exist alone. In addition, a character "/" herein generally indicates that the associated objects before and after this character are in an "or" relationship.

In the various embodiments of the present application, the magnitude of the serial numbers of the above processes does not indicate an execution order. The execution order of each process should be determined by its function and internal logic, and should not constitute any limitation on the implementation process of the embodiments of the present application.

In the several embodiments provided in the present application, it should be understood that the disclosed systems, apparatuses, and methods may be implemented in other ways. For example, the apparatus embodiments described above are merely illustrative. For example, the division of the units is only a logical functional division, and there may be other division methods in actual implementation. For example, a plurality of units or components may be combined or integrated into another system, or some features may be ignored or not performed. In addition, the mutual coupling, direct coupling or communication connection shown or discussed may be through some interfaces, and the indirect coupling or communication connection between apparatuses or units may be in electrical, mechanical, or other forms.

The units described as separate components may or may not be physically separate, and the components displayed as units may or may not be physical units, that is, they may be located in one place, or may be distributed on a plurality of network units. Some or all of the units may be selected according to actual needs to achieve the purpose of the solutions of the embodiments.

In addition, each functional unit in the various embodiments of the present application may be integrated into one processing unit, or each unit may exist physically separately, or two or more units may be integrated into one unit.

In the above embodiments, all or part of the above embodiments may be implemented by software, hardware, firmware or any combination thereof. When implemented using software, all or part of the above embodiments may be implemented in a form of a computer program product. The computer program product includes one or more computer instructions. When the computer program instructions are loaded and executed on a computer, the process or the function described in the embodiments of the present application is generated in all or part. The computer may be a general purpose computer, a special purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center through wired method (e.g., coaxial cable, optical fiber, or digital subscriber line (DSL)) or wireless method (e.g., infrared, radio, or microwave). The computer-readable storage medium may be any available medium that is capable of being read by the computer or a data storage device containing one or more available media integrated together, such as a server or a data center. The available medium may be a magnetic medium (e.g., a floppy disk, a hard disk, a magnetic tape), an optical medium (e.g., DVD), a semiconductor medium (e.g., a solid state disk (SSD)), or the like.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A wireless communication method, comprising:
receiving, by a first network element, first information transmitted by a second network element; wherein the first information comprises one or more of following information:
state information of a first terminal device;
context information of the first terminal device; or
security context information of the first terminal device;
wherein the second network element is configured to perform mobility management for terminal devices.

2. The method according to claim 1, wherein
the first network element is deployed on ground; and/or
the second network element is deployed on a satellite.

3. The method according to claim 1 or 2, further comprising:
transmitting, by the first network element, second information to a third network element; wherein the second information comprises one or more of following information:
subscription data of a second terminal device; or
security parameters related to authentication and authorization of the second terminal device;
wherein the third network element is configured to store subscription data of terminal devices, and the second terminal device is a terminal device that fails to register with or attach to the second network element.

4. The method according to claim 3, wherein the third network element is located on a satellite.

5. The method according to claim 3 or 4, wherein before the transmitting, by the first network element, the second information to the third network element, the method further comprises:
receiving, by the first network element, third information transmitted by the third network element; wherein the third information is used to request the second information.

6. The method according to claim 5, wherein the third information comprises one or more of:
an identifier of the second terminal device;
an identifier of a satellite where the third network element is located;
an area where the second terminal device is located when initiating an attach request or a registration request; or
a residence time of the second terminal device in the area.

7. The method according to any one of claims 3 to 6, wherein a reason for a registration or attachment failure of the second terminal device is that the third network element does not store the subscription data of the second terminal device and/or the security parameters related to authentication and authorization of the second terminal device.

8. The method according to any one of claims 1 to 7, further comprising:
transmitting, by the first network element, the first information to a fourth network element; wherein the fourth network element is configured to perform mobility management for terminal devices, and the fourth network element does not store the first information.

9. The method according to claim 8, wherein the fourth network element and the second network element are located on different satellites.

10. The method according to claim 8 or 9, wherein the first network element stores ephemeris information of satellites, and a satellite where the fourth network element is located is determined based on the ephemeris information.

11. The method according to any one of claims 8 to 10, wherein a coverage area of an access network device located on the same satellite as the fourth network element includes a registration area of the first terminal device.

12. The method according to any one of claims 1 to 11, further comprising:
transmitting, by the first network element, fourth information to a fifth network element; wherein the fourth information comprise one or more of:
subscription data of the first terminal device; or
security parameters related to authentication and authorization of the first terminal device;
wherein the fifth network element is configured to store subscription data of terminal devices, and the fifth network element does not store the fourth information.

13. The method according to claim 12, wherein the fifth network element and the second network element are located on different satellites.

14. The method according to any one of claims 1 to 13, further comprising:
receiving, by the first network element, fifth information transmitted by the second network element; wherein the fifth information is used to indicate that a state of the first terminal device is switched from a registered state to a deregistered state.

15. The method according to claim 14, further comprising:
in response to the fifth information, performing, by the first network element, one or more of following operations:
updating the state of the first terminal device stored in the first network element to the deregistered state; or
deleting the context information of the first terminal device and/or the security context information of the first terminal device.

16. The method according to claim 14 or 15, further comprising:
transmitting, by the first network element, sixth information to a fourth network element; wherein the fourth network element is configured to perform mobility management for terminal devices, and the sixth information is used to indicate the fourth network element to switch the state of the first terminal device from the registered state to the deregistered state.

17. The method according to claim 16, wherein the fourth network element and the second network element are located on different satellites.

18. The method according to any one of claims 1 to 17, wherein the first network element is one of:
a home subscriber server (HSS);
a mobility management entity (MME) and an HSS;
a unified data management (UDM)/unified data repository (UDR); or
an access and mobility management function (AMF) and a UDM/UDR.

19. The method according to any one of claims 1 to 18, wherein the security context information comprises an authentication vector.

20. A wireless communication method, comprising:
transmitting, by a second network element, first information to a first network element; wherein the first information comprises one or more of following information:
state information of a first terminal device;
context information of the first terminal device; or
security context information of the first terminal device;
wherein the second network element is configured to perform mobility management for terminal devices.

21. The method according to claim 20, wherein
the first network element is deployed on ground; and/or
the second network element is deployed on a satellite.

22. The method according to claim 20 or 21, further comprising:
receiving, by the second network element, uplink data from the first terminal device; and
storing, by the second network element, the uplink data.

23. The method according to any one of claims 20 to 22, further comprising:
after a state of the first terminal device is switched to a deregistered state, transmitting, by the second network element, fifth information to the first network element; wherein the fifth information is used to indicate that the state of the first terminal device is the deregistered state.

24. The method according to any one of claims 20 to 23, further comprising:
receiving, by the second network element, seventh information transmitted by the first network element; wherein the seventh information is used to indicate that a state of a third terminal device is switched from a registered state to a deregistered state; and
in response to the seventh information, switching, by the second network element, the state of the third terminal device stored in the second network element from the registered state to the deregistered state.

25. The method according to any one of claims 20 to 24, wherein before the transmitting, by the second network element, the first information to the first network element, the method further comprises:
receiving, by the second network element, an attach request or a registration request transmitted by the first terminal device; wherein the attach request or the registration request comprises an identifier of a serving satellite of the first terminal device.

26. The method according to claim 25, further comprising:
in response to that a third network element does not store subscription data of the first terminal device and/or security parameters related to authentication and authorization of the first terminal device, transmitting, by the second network element, a response message to the attach request or the registration request to the first terminal device; wherein the response message is used to reject the attach request or registration request of the first terminal device, the third network element is configured to store subscription data of terminal devices, and the third network element is associated with the second network element.

27. The method according to claim 26, wherein the second network element and the third network element are located on the same satellite.

28. The method according to claim 26 or 27, wherein the response message comprises one or more of:
a rejection reason for attachment or registration of the first terminal device;
an identifier of the first terminal device; or
an identifier of a satellite where the second network element is located.

29. The method according to claim 28, wherein the rejection reason comprises that the third network element does not store the subscription data of the first terminal device and/or the security parameters related to authentication and authorization of the first terminal device.

30. The method according to any one of claims 20 to 29, wherein the security context information comprises an authentication vector.

31. The method according to any one of claims 20 to 30, wherein the first network element is one of:
a home subscriber server (HSS);
a mobility management entity (MME) and an HSS;
a unified data management (UDM)/unified data repository (UDR); or
an access and mobility management function (AMF) and a UDM/UDR.

32. A wireless communication method, comprising:
receiving, by a third network element, second information transmitted by a first network element; wherein the second information comprises one or more of following information:
subscription data of a second terminal device; or
security parameters related to authentication and authorization of the second terminal device;
wherein the third network element is configured to store subscription data of terminal devices, the second terminal device is a terminal device that fails to register with or attach to a second network element, the second network element is configured to perform mobility management for terminal devices, and the second network element is associated with the third network element.

33. The method according to claim 32, wherein
the first network element is deployed on ground; and/or
the second network element and the third network element are located on the same satellite.

34. The method according to claim 32 or 33, wherein before the receiving, by the third network element, the second information transmitted by the first network element, the method further comprises:
transmitting, by the third network element, third information to the first network element; wherein the third information is used to request the second information.

35. The method according to claim 34, wherein the third information comprises one or more of:
an identifier of the second terminal device;
an identifier of a satellite where the third network element is located;
an area where the second terminal device is located when initiating an attach request or a registration request; or
a residence time of the second terminal device in the area.

36. The method according to any one of claims 32 to 35, further comprising:
in response to a state of the second terminal device switching from a registered state to a deregistered state, deleting, by the third network element, the second information.

37. The method according to any one of claims 32 to 36, wherein the first network element is one of:
a home subscriber server (HSS);
a mobility management entity (MME) and an HSS;
a unified data management (UDM)/unified data repository (UDR); or
an access and mobility management function (AMF) and a UDM/UDR.

38. A wireless communication method, comprising:
transmitting, by a first terminal device, an attach request or a registration request to a second network element; wherein the second network element is configured to perform mobility management for terminal devices.

39. The method according to claim 38, wherein the transmitting, by the first terminal device, the attach request or the registration request to the second network element comprises:
transmitting, by the first terminal device, the attach request or the registration request to the second network element in a case where the first terminal device supports a store and forward mode.

40. The method according to claim 38 or 39, wherein the second network element is located on a satellite.

41. The method according to any one of claims 38 to 40, wherein the attach request or the registration request comprises an identifier of a serving satellite of the first terminal device.

42. The method according to any one of claims 38 to 41, further comprising:
receiving, by the first terminal device, a response message to the attach request or the registration request; wherein the response message is used to reject the attach request or registration request of the first terminal device.

43. The method according to claim 42, wherein the response message comprises one or more of:
a rejection reason for attachment or registration of the first terminal device;
an identifier of the first terminal device; or
an identifier of a satellite where the second network element is located.

44. The method according to claim 43, wherein the rejection reason comprises that a third network element does not store subscription data of the first terminal device and/or security parameters related to authentication and authorization of the first terminal device.

45. The method according to claim 44, wherein the third network element is configured to store subscription data of terminal devices, and the third network element is associated with the second network element.

46. The method according to claim 45, wherein the second network element and the third network element are located on the same satellite.

47. The method according to any one of claims 38 to 46, wherein before the transmitting, by the first terminal device, the attach request or the registration request to the second network element, the method further comprises:
receiving, by the first terminal device, broadcast information from a first access network device; wherein the broadcast information comprises one or more of:
an identifier of a first satellite where a first access network is located; or
an identifier of a terminal device or terminal device group served by the first satellite.

48. The method according to claim 47, wherein the receiving, by the first terminal device, the broadcast information from the first access network device comprises:
receiving, by the first terminal device, the broadcast information from the first access network device when a service link between the first terminal device and the first access network device is available.

49. The method according to claim 47 or 48, wherein the first access network and the second network element are located on the same satellite.

50. The method according to any one of claims 38 to 49, wherein that a first satellite where the second network element is located is a serving satellite of the first terminal device is determined based on one or more of:
information of a serving satellite configured for the first terminal device; or
broadcast information from an access network device on the first satellite, wherein the broadcast information is used to indicate identifiers of terminal devices served by the first satellite and/or an identifier of the first satellite.

51. The method according to any one of claims 38 to 50, further comprising:
transmitting, by the first terminal device, uplink data from the first terminal device to a first access network device; and
after the uplink data is stored in a satellite where the first access network device is located, receiving, by the first terminal device, a radio resource control (RRC) connection release message transmitted by the first access network device.

52. The method according to any one of claims 38 to 51, further comprising:
transmitting, by the first terminal device, a detach request or a deregistration request to the second network element; and
receiving, by the first terminal device, a paging message transmitted by a first access network device; wherein the paging message is used to indicate that the detach request or the deregistration request is accepted;
wherein the first access network device and the second network element are located on the same satellite.

53. A wireless communication method, comprising:
transmitting, by a first access network device, broadcast information; wherein the first access network is located on a first satellite, and the broadcast information is used to indicate one or more of:
identifiers of terminal devices served by the first satellite; or
an identifier of the first satellite.

54. The method according to claim 53, further comprising:
after the first terminal device transmits a detach request or a deregistration request, transmitting, by the first access network device, a paging message to the first terminal device; wherein the paging message is used to indicate that the detach request or the deregistration request is accepted.

55. A communication device, wherein the communication device is a first network element, and the communication device comprises:
a first communication module, configured to receive first information transmitted by a second network element; wherein the first information comprises one or more of following information:
state information of a first terminal device;
context information of the first terminal device; or
security context information of the first terminal device;
wherein the second network element is configured to perform mobility management for terminal devices.

56. The communication device according to claim 55, wherein
the first network element is deployed on ground; and/or
the second network element is deployed on a satellite.

57. The communication device according to claim 55 or 56, wherein the first communication module is further configured to:
transmit second information to a third network element; wherein the second information comprises one or more of following information:
subscription data of a second terminal device; or
security parameters related to authentication and authorization of the second terminal device;
wherein the third network element is configured to store subscription data of terminal devices, and the second terminal device is a terminal device that fails to register with or attach to the second network element.

58. The communication device according to claim 57, wherein the third network element is located on a satellite.

59. The communication device according to claim 57 or 58, wherein the first communication module is further configured to:
before the first network element transmits the second information to the third network element, receive third information transmitted by the third network element; wherein the third information is used to request the second information.

60. The communication device according to claim 59, wherein the third information comprises one or more of:
an identifier of the second terminal device;
an identifier of a satellite where the third network element is located;
an area where the second terminal device is located when initiating an attach request or a registration request;
a residence time of the second terminal device in the area.

61. The communication device according to any one of claims 57 to 60, wherein a reason for a registration or attachment failure of the second terminal device is that the third network element does not store the subscription data of the second terminal device and/or the security parameters related to authentication and authorization of the second terminal device.

62. The communication device according to any one of claims 55 to 61, wherein the first communication module is further configured to:
transmit the first information to a fourth network element; wherein the fourth network element is configured to perform mobility management for terminal devices, and the fourth network element does not store the first information.

63. The communication device according to claim 62, wherein the fourth network element and the second network element are located on different satellites.

64. The communication device according to claim 62 or 63, wherein the first network element stores ephemeris information of satellites, and a satellite where the fourth network element is located is determined based on the ephemeris information.

65. The communication device according to any one of claims 62 to 64, wherein a coverage area of an access network device located on the same satellite as the fourth network element includes a registration area of the first terminal device.

66. The communication device according to any one of claims 55 to 65, wherein the first communication module is further configured to:
transmit fourth information to a fifth network element; wherein the fourth information comprises one or more of:
subscription data of the first terminal device; or
security parameters related to authentication and authorization of the first terminal device;
wherein the fifth network element is configured to store subscription data of terminal devices, and the fifth network element does not store the fourth information.

67. The communication device according to claim 66, wherein the fifth network element and the second network element are located on different satellites.

68. The communication device according to any one of claims 55 to 67, wherein the first communication module is further configured to:
receive fifth information transmitted by the second network element; wherein the fifth information is used to indicate that a state of the first terminal device is switched from a registered state to a deregistered state.

69. The communication device according to claim 68, wherein the communication device further comprises:
an execution module, configured to, in response to the fifth information, perform one or more of following operations:
updating the state of the first terminal device stored in the first network element to the deregistered state; or
deleting the context information of the first terminal device and/or the security context information of the first terminal device.

70. The communication device according to claim 68 or 69, wherein the first communication module is further configured to:
transmit sixth information to a fourth network element; wherein the fourth network element is configured to perform mobility management for terminal devices, and the sixth information is used to indicate the fourth network element to switch the state of the first terminal device from the registered state to the deregistered state.

71. The communication device according to claim 70, wherein the fourth network element and the second network element are located on different satellites.

72. The communication device according to any one of claims 55 to 71, wherein the first network element is one of:
a home subscriber server (HSS);
a mobility management entity (MME) and an HSS;
a unified data management (UDM)/unified data repository (UDR); or
an access and mobility management function (AMF) and a UDM/UDR.

73. The communication device according to any one of claims 55 to 72, wherein the security context information comprises an authentication vector.

74. A communication device, wherein the communication device is a second network element, and the communication device comprises:
a first communication module, configured to transmit first information to a first network element; wherein the first information comprises one or more of following information:
state information of a first terminal device;
context information of the first terminal device; or
security context information of the first terminal device;
wherein the second network element is configured to perform mobility management for terminal devices.

75. The communication device according to claim 74, wherein
the first network element is deployed on ground; and/or
the second network element is deployed on a satellite.

76. The communication device according to claim 74 or 75, wherein the first communication module is further configured to:
receive uplink data from the first terminal device;
wherein the communication device further comprises:
a storage module, configured to store the uplink data.

77. The communication device according to any one of claims 74 to 76, wherein the first communication module is further configured to:
after a state of the first terminal device is switched to a deregistered state, transmit fifth information to the first network element; wherein the fifth information is used to indicate that the state of the first terminal device is the deregistered state.

78. The communication device according to any one of claims 74 to 77, wherein the first communication module is further configured to:
receive seventh information transmitted by the first network element; wherein the seventh information is used to indicate that a state of a third terminal device is switched from a registered state to a deregistered state;
wherein the communication device further comprises:
a switching module, configured to, in response to the seventh information, switch the state of the third terminal device stored in the second network element from the registered state to the deregistered state.

79. The communication device according to any one of claims 74 to 78, wherein the first communication module is further configured to:
before the second network element transmits the first information to the first network element, receive an attach request or a registration request transmitted by the first terminal device; wherein the attach request or the registration request comprises an identifier of a serving satellite of the first terminal device.

80. The communication device according to claim 79, wherein the first communication module is further configured to:
in response to that a third network element does not store subscription data of the first terminal device and/or security parameters related to authentication and authorization of the first terminal device, transmit a response message to the attach request or the registration request to the first terminal device; wherein the response message is used to reject the attach request or registration request of the first terminal device, the third network element is configured to store subscription data of terminal devices, and the third network element is associated with the second network element.

81. The communication device according to claim 80, wherein the second network element and the third network element are located on the same satellite.

82. The communication device according to claim 80 or 81, wherein the response message comprises one or more of:
a rejection reason for attachment or registration of the first terminal device;
an identifier of the first terminal device; or
an identifier of a satellite where the second network element is located.

83. The communication device according to claim 82, wherein the rejection reason comprises that the third network element does not store the subscription data of the first terminal device and/or the security parameters related to authentication and authorization of the first terminal device.

84. The communication device according to any one of claims 74 to 83, wherein the security context information comprises an authentication vector.

85. The communication device according to any one of claims 74 to 84, wherein the first network element is one of:
a home subscriber server (HSS);
a mobility management entity (MME) and an HSS;
a unified data management (UDM)/unified data repository (UDR); or
an access and mobility management function (AMF) and a UDM/UDR.

86. A communication device, wherein the communication device is a third network element, and the communication device comprises:
a first communication module, configured to receive second information transmitted by a first network element; wherein the second information comprises one or more of following information:
subscription data of a second terminal device; or
security parameters related to authentication and authorization of the second terminal device;
wherein the third network element is configured to store subscription data of terminal devices, the second terminal device is a terminal device that fails to register with or attach to a second network element, the second network element is configured to perform mobility management for terminal devices, and the second network element is associated with the third network element.

87. The communication device according to claim 86, wherein
the first network element is deployed on ground; and/or
the second network element and the third network element are located on the same satellite.

88. The communication device according to claim 86 or 87, wherein the first communication module is further configured to:
before the third network element receives the second information transmitted by the first network element, transmit third information to the first network element; wherein the third information is used to request the second information.

89. The communication device according to claim 88, wherein the third information comprises one or more of:
an identifier of the second terminal device;
an identifier of a satellite where the third network element is located;
an area where the second terminal device is located when initiating an attach request or a registration request; or
a residence time of the second terminal device in the area.

90. The communication device according to any one of claims 86 to 89, wherein the communication device further comprises:
a deletion module, configured to, in response to a state of the second terminal device switching from a registered state to a deregistered state, delete the second information.

91. The communication device according to any one of claims 86 to 90, wherein the first network element is one of:
a home subscriber server (HSS);
a mobility management entity (MME) and an HSS;
a unified data management (UDM)/unified data repository (UDR); or
an access and mobility management function (AMF) and a UDM/UDR.

92. A communication device, wherein the communication device is a first terminal device, and the communication device comprises:
a first communication module, configured to transmit an attach request or a registration request to a second network element; wherein the second network element is configured to perform mobility management for terminal devices.

93. The communication device according to claim 92, wherein the first communication module is configured to:
transmit the attach request or the registration request to the second network element in a case where the first terminal device supports a store and forward mode.

94. The communication device according to claim 92 or 93, wherein the second network element is located on a satellite.

95. The communication device according to any one of claims 92 to 94, wherein the attach request or the registration request comprises an identifier of a serving satellite of the first terminal device.

96. The communication device according to any one of claims 92 to 95, wherein the first communication module is further configured to:
receive a response message to the attach request or the registration request; wherein the response message is used to reject the attach request or registration request of the first terminal device.

97. The communication device according to claim 96, wherein the response message comprises one or more of:
a rejection reason for attachment or registration of the first terminal device;
an identifier of the first terminal device; or
an identifier of a satellite where the second network element is located.

98. The communication device according to claim 97, wherein the rejection reason comprises that a third network element does not store subscription data of the first terminal device and/or security parameters related to authentication and authorization of the first terminal device.

99. The communication device according to claim 98, wherein the third network element is configured to store subscription data of terminal devices, and the third network element is associated with the second network element.

100. The communication device according to claim 99, wherein the second network element and the third network element are located on the same satellite.

101. The communication device according to any one of claims 93 to 100, wherein the first communication module is further configured to:
before the first terminal device transmits the attach request or the registration request to the second network element, receive broadcast information from a first access network device; wherein the broadcast information comprises one or more of:
an identifier of a first satellite where a first access network is located; or
an identifier of a terminal device or terminal device group served by the first satellite.

102. The communication device according to claim 101, wherein the first communication module is configured to:
receive the broadcast information from the first access network device in a case where a service link between the first terminal device and the first access network device is available.

103. The communication device according to claim 101 or 102, wherein the first access network and the second network element are located on the same satellite.

104. The communication device according to any one of claims 92 to 103, wherein that a first satellite where the second network element is located is a serving satellite of the first terminal device is determined based on one or more of:
information of a serving satellite configured for the first terminal device; or
broadcast information from an access network device on the first satellite, wherein the broadcast information is used to indicate identifiers of terminal devices served by the first satellite and/or an identifier of the first satellite.

105. The communication device according to any one of claims 92 to 104, wherein the first communication module is further configured to:
transmit uplink data from the first terminal device to a first access network device; and
after the uplink data is stored in a satellite where the first access network device is located, receive, by the first terminal device, a radio resource control (RRC) connection release message transmitted by the first access network device.

106. The communication device according to any one of claims 92 to 105, wherein the first communication module is further configured to:
transmit, by the first terminal device, a detach request or a deregistration request to the second network element; and
receive, by the first terminal device, a paging message transmitted by a first access network device; wherein the paging message is used to indicate that the detach request or the deregistration request is accepted;
wherein the first access network device and the second network element are located on the same satellite.

107. A communication device, wherein the communication device is a first access network device, and the communication device comprises:
a first communication module, configured to transmit broadcast information; wherein the first access network device is located on a first satellite, and the broadcast information is used to indicate one or more of:
identifiers of terminal devices served by the first satellite; or
an identifier of the first satellite.

108. The communication device according to claim 107, wherein the first communication module is further configured to:
after the first terminal device transmits a detach request or a deregistration request, transmit a paging message to the first terminal device; wherein the paging message is used to indicate that the detach request or the deregistration request is accepted.

109. A communication device, comprising a memory and a processor, wherein the memory is configured to store a program, and the processor is configured to call the program from the memory to perform the method according to any one of claims 1 to 54.

110. A chip, comprising: a processor, configured to call a program from a memory, to enable a device equipped with the chip to perform the method according to any one of claims 1 to 54.

111. A computer-readable storage medium, having a program stored thereon, wherein the program enables a computer to perform the method according to any one of claims 1 to 54.

112. A computer program product, comprising a program, wherein the program enables a computer to perform the method according to any one of claims 1 to 54.

113. A computer program, wherein the computer program enables a computer to perform the method according to any one of claims 1 to 54.
